# EUROPEAN PATENT APPLICATION

(11) **EP 3 567 794 A1**
(43) Date of publication of application: **13.11.2019**
(21) Application number: 17903678.5
(22) Date of filing: 31.03.2017
(51) Int. Cl.: H04L 5/14

(54) **FULL DUPLEX TRANSMISSION METHOD AND DEVICE**

(71) Applicant: Huawei Technologies Co., Ltd., Longgang District Shenzhen, Guangdong 518129 (CN)
(72) Inventor: DONG, Chen, Shenzhen Guangdong 518129 (CN); JIANG, Tong, Shenzhen Guangdong 518129 (CN); LI, Qiang, Shenzhen Guangdong 518129 (CN)
(74) Representative: Gill Jennings & Every LLP
(86) International application number: PCT/CN2017/079143
(87) International publication number: WO 2018/176431

(57) **Abstract**

This application provides a full duplex transmission method and apparatus. The method includes: when a first sending node sends a first data frame to a first receiving node, sending, by a second sending node, an access request and/or a second data frame to a second receiving node based on first indication information, where the first sending node and the second receiving node are the same node, and the first indication information includes at least one of an access node list or a transmission node list; and obtaining, by the second sending node, second indication information from the second receiving node, where the second indication information includes information used to indicate whether the access request and/or the second data frame are/is sent successfully. The full duplex transmission method and apparatus provided by this application can establish full duplex transmission.

## Description

### TECHNICAL FIELD

Embodiments of this application relate to communications technologies, and in particular, to a full duplex transmission method and apparatus.

### BACKGROUND

In a communications system, full duplex transmission means that a node can also receive data when sending data. Based on different quantities of participating nodes, full duplex transmission may be classified into symmetric full duplex transmission between two nodes and asymmetric full duplex transmission between three nodes.

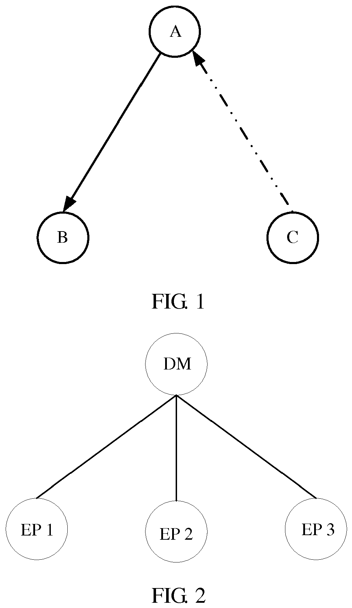

FIG. 1 is a schematic diagram of a topology of full duplex transmission. As shown in FIG. 1, if a node A also receives data sent by a node C when sending data to a node B, the node A implements full duplex transmission.

A problem to be resolved for full duplex is how to determine two (or three) nodes forming full duplex transmission and establish full duplex transmission. One idea for resolving this problem is that a master node (for example, a DM, an AP, or a base station) responsible for network resource scheduling predetermines the two or (three) nodes, and allocates a contention-free transmission resource to the nodes, and then the nodes perform contention-free full duplex transmission on the transmission resource. Another idea is that, two nodes first obtain transmission resources required by the nodes and then start to perform transmission first, that is, first transmission; and which two nodes form second transmission and when to start second transmission need to be determined according to a method and a rule. Therefore, second transmission usually starts to be performed later than first transmission. In full duplex transmission shown in FIG. 1, it is assumed that first transmission is the nodes A and B, and in first transmission, a contention-free transmission resource is used for transmission. After first transmission starts, the node C wants to send data to the node A in a contention manner to establish second transmission. If there are a plurality of nodes C that want to send data to the node A, the plurality of nodes cannot send data to the node A simultaneously. Otherwise, a collision occurs. How to select a node C from the plurality of nodes C to send data to the node A to establish full duplex transmission is a technical problem urgently to be resolved currently.

### SUMMARY

Embodiments of this application provide a full duplex transmission method and apparatus to resolve a technical problem in the prior art about how to establish full duplex transmission when there are a plurality of nodes.

A first aspect of this application provides a full duplex transmission method, including:
when a first sending node sends a first data frame to a first receiving node, sending, by a second sending node, an access request and/or a second data frame to a second receiving node based on first indication information, where the first sending node and the second receiving node are the same node, and the first indication information includes at least one of an access node list or a transmission node list; and
obtaining, by the second sending node, second indication information from the second receiving node, where the second indication information includes information used to indicate whether the access request and/or the second data frame are/is sent successfully.

In the foregoing solution, the access node list is used to indicate which second sending nodes may send access requests in access timeslots to the second receiving node, and the transmission node list is used to indicate which second sending nodes may send data frames in transmission timeslots to the second receiving node.

When the first sending node sends the first data frame to the first receiving node, the second sending node sends the access request and/or the second data frame to the second receiving node based on the first indication information. Therefore, the second sending node obtains the second indication information from the second receiving node, to learn whether the access request and/or the second data frame are/is sent successfully. Because the second sending node sends the access request and/or the second data frame to the second receiving node based on the first indication information, the first sending node receives the access request and/or the second data frame when sending the first data frame. In this way, full duplex transmission is completed. In addition, the full duplex transmission method in this application is applicable to both symmetric full duplex transmission between two nodes and asymmetric full duplex transmission between three nodes, thereby creating more full duplex transmission opportunities, and increasing a network throughput.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the obtaining, by the second sending node, second indication information from the second receiving node includes:
when the first receiving node sends an acknowledgement frame to the first sending node, receiving, by the second sending node, the second indication information sent by the second receiving node; or
when the first sending node sends a first data frame to the first receiving node next time, obtaining, by the second sending node, the second indication information from the second receiving node, where the second indication information is carried in the first data frame.

In the foregoing solution, the second sending node may directly receive the second indication information sent by the second receiving node, or when the first sending node sends the first data frame to the first receiving node next time, the second sending node obtains the second indication information from the second receiving node, so that a manner of obtaining the second indication information is relatively flexible.

Optionally, before the sending, by a second sending node, an access request and/or a second data frame to a second receiving node based on first indication information, the method further includes:
obtaining, by the second sending node, the first indication information from the second receiving node, where the first indication information is carried in the first data frame; or
obtaining, by the second sending node, the first indication information from the second receiving node, where the first indication information is carried in previous second indication information, and the previous second indication information is second indication information sent by the second receiving node to the second sending node when the first receiving node sends an acknowledgement frame to the first sending node previous time.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

In the foregoing solution, several possible manners of the channel configuration information are: (1) a channel configuration is fixed and unchanged; (2) the channel may be configured flexibly, and the second receiving node changes a channel configuration periodically or in an event trigger manner; and (3) a channel configuration may implement support for priorities.

Optionally, the channel configuration information indicates that the channel includes at least one access timeslot; and
the sending, by a second sending node, an access request to a second receiving node based on first indication information includes:
if the access node list includes a first field, and the first field indicates that the second sending node is allowed to send the access request, randomly selecting, by the second sending node, an access timeslot, and sending the access request in the access timeslot to the second receiving node; or
if the access node list includes the first field and a second field, where the second field is used to indicate a collision queue, and the collision queue is used to indicate a sequence of resending access requests by second sending nodes that have sent the access requests but the sent access requests collide, randomly selecting, by the second sending node arranged at a queue head of the collision queue, an access timeslot, and sending the access request in the access timeslot to the second receiving node.

In the foregoing solution, the second sending node has three different states, specifically: (1) an access state, which means that the second sending node has not sent an access request to the second receiving node yet, and waits for sending an access request to the second receiving node; (2) a collision state, which means that the second sending node has sent an access request to the second receiving node, but does not send the access request successfully, and therefore needs to resend the access request; and (3) a transmission state, which means that the second sending node has successfully sent an access request to the second receiving node, and waits for the second receiving node to allocate a transmission timeslot for sending data.

The first field is set to forbid the second sending node in the access state to send an access request and allow only the second sending node in the collision state to send an access request. Therefore, a collision already generated in a network can be resolved quickly, and the network stability and throughput are increased.

Optionally, the channel configuration information indicates that the channel includes at least one access timeslot, and the access node list indicates information about a second sending node that is allowed to send an access request to the second receiving node; and
the sending, by a second sending node, an access request to a second receiving node based on first indication information includes:
sending, by an i^{th} second sending node, the access request in an i^{th} access timeslot to the second receiving node, where i is less than or equal to m, m is a total quantity of access timeslots, and i and m are both positive integers.

In the foregoing solution, the second sending node in the access node list sends, to the second receiving node, an access request in an access timeslot allocated to the second sending node.

Optionally, the channel configuration information indicates that the channel includes at least one transmission timeslot, and the transmission node list indicates information about a second sending node that is allowed to send the second data frame to the second receiving node; and
the sending, by a second sending node, a second data frame to a second receiving node based on first indication information includes:
sending, by the second sending node in the transmission node list, the second data frame in the transmission timeslot to the second receiving node.

In the foregoing solution, the transmission node list is significant only when the channel configuration information indicates that a transmission channel exists and the transmission channel includes at least one transmission timeslot. When the channel configuration information indicates that the channel includes at least one transmission timeslot, the second sending node in the transmission node list sends the second data frame in the transmission timeslot to the second receiving node based on the first indication information.

Optionally, the channel configuration information indicates that the channel includes at least one transmission timeslot, and the transmission node list indicates information about a second sending node that is allowed to send the second data frame to the second receiving node; and
the sending, by a second sending node, a second data frame to a second receiving node based on first indication information includes:
if the second sending node has a second data frame to be sent to the second receiving node, sending, by the second sending node, the second data frame to the second receiving node after the transmission timeslot starts.

In the foregoing solution, if the second sending node in the transmission node list has a second data frame to be sent to the second receiving node, the second sending node sends the second data frame to the second receiving node after the transmission timeslot allocated to the second sending node starts.

Optionally, the first data frame includes a third field, and the third field is used to indicate whether the first data frame carries the first indication information.

A second aspect of this application provides a full duplex transmission method, including:
when a first sending node sends a first data frame to a first receiving node, receiving, by a second receiving node, an access request and/or a second data frame sent by a second sending node based on first indication information, where the first indication information includes at least one of an access node list or a transmission node list, and the first sending node and the second receiving node are the same node; and
sending, by the second receiving node, second indication information to the second sending node, where the second indication information includes information used to indicate whether the access request and/or the second data frame are/is sent successfully.

In the foregoing solution, the access node list is used to indicate which second sending nodes may send access requests in access timeslots to the second receiving node, and the transmission node list is used to indicate which second sending nodes may send data frames in transmission timeslots to the second receiving node.

When the first sending node sends the first data frame to the first receiving node, the second receiving node receives the access request and/or the second data frame sent by the second sending node based on the first indication information. Therefore, the second receiving node sends the second indication information to the second sending node, so that the second sending node learns whether the access request and/or the second data frame are/is sent successfully. Because the second receiving node receives the access request and/or the second data frame sent by the second sending node based on the first indication information, the first sending node receives the access request and/or the second data frame when sending the first data frame. In this way, full duplex transmission is completed. In addition, the full duplex transmission method in this application is applicable to both symmetric full duplex transmission between two nodes and asymmetric full duplex transmission between three nodes, thereby creating more full duplex transmission opportunities, and increasing a network throughput.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the sending, by the second receiving node, second indication information to the second sending node includes:
when the first receiving node sends an acknowledgement frame to the first sending node, sending, by the second receiving node, the second indication information to the second sending node; or
when the first sending node sends a first data frame to the first receiving node next time, sending, by the second receiving node, the second indication information to the second sending node, where the second indication information is carried in the first data frame.

In the foregoing solution, the second receiving node may directly send the second indication information to the second sending node, or may add the second indication information to the first data frame and send the first data frame to the second sending node, so that a manner of sending the second indication information is relatively flexible.

Optionally, before the receiving, by a second receiving node, an access request and/or a second data frame sent by a second sending node based on first indication information, the method further includes:
sending, by the second receiving node, the first indication information to the second sending node, where the first indication information is carried in the first data frame sent by the first sending node to the first receiving node; or
when the first receiving node sends an acknowledgement frame to the first sending node previous time, sending, by the second receiving node, second indication information to the second sending node, where the second indication information carries the first indication information.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

In the foregoing solution, several possible manners of the channel configuration information are: (1) a channel configuration is fixed and unchanged; (2) the channel may be configured flexibly, and the second receiving node changes a channel configuration periodically or in an event trigger manner; and (3) a channel configuration may implement support for priorities.

Optionally, the channel configuration information indicates that the channel includes at least one access timeslot; and
the receiving, by a second receiving node, an access request sent by a second sending node based on first indication information includes:
if the access node list includes a first field, and the first field indicates that the second sending node is allowed to send the access request, receiving, by the second receiving node in an access timeslot, the access request sent by the second sending node, where the access timeslot is an access timeslot randomly selected by the second sending node; or
if the access node list includes the first field and a second field, where the second field is used to indicate a collision queue, and the collision queue is used to indicate a sequence of resending access requests by second sending nodes that have sent the access requests but the sent access requests collide, receiving, by the second receiving node in an access timeslot, the access request sent by the second sending node, where the access timeslot is an access timeslot randomly selected by the second sending node arranged at a queue head of the collision queue.

In the foregoing solution, the second sending node has three different states, specifically: (1) an access state, which means that the second sending node has not sent an access request to the second receiving node yet, and waits for sending an access request to the second receiving node; (2) a collision state, which means that the second sending node has sent an access request to the second receiving node, but does not send the access request successfully, and therefore needs to resend the access request; and (3) a transmission state, means that the second sending node has successfully sent an access request to the second receiving node, and waits for the second receiving node to allocate a transmission timeslot for sending data.

The first field is set to forbid the second sending node in the access state to send an access request and allow only the second sending node in the collision state to send an access request. Therefore, a collision already generated in a network can be resolved quickly, and the network stability and throughput are increased.

Optionally, the channel configuration information indicates that the channel includes at least one access timeslot, and the access node list indicates information about a second sending node that is allowed to send an access request to the second receiving node; and
the receiving, by a second receiving node, an access request sent by a second sending node based on first indication information includes:
receiving, by the second receiving node in an i^{th} access timeslot, the access request sent by an i^{th} second sending node, where i is less than or equal to m, m is a total quantity of access timeslots, and i and m are both positive integers.

In the foregoing solution, the second sending node in the access node list sends, to the second receiving node, an access request in an access timeslot allocated to the second sending node.

Optionally, the channel configuration information indicates that the channel includes at least one transmission timeslot, and the transmission node list indicates information about a second sending node that is allowed to send the second data frame to the second receiving node; and
the receiving, by a second receiving node, a second data frame sent by a second sending node based on first indication information includes:
receiving, by the second receiving node, the second data frame sent in the transmission timeslot by the second sending node in the transmission node list.

In the foregoing solution, the transmission node list is significant only when the channel configuration information indicates that a transmission channel exists and the transmission channel includes at least one transmission timeslot. When the channel configuration information indicates that the channel includes at least one transmission timeslot, the second receiving node receives the second data frame sent in the transmission timeslot by the second sending node in the transmission node list.

Optionally, the channel configuration information indicates that the channel includes at least one transmission timeslot, and the transmission node list indicates information about a second sending node that is allowed to send the second data frame to the first sending node; and
the receiving, by a second receiving node, a second data frame sent by a second sending node based on first indication information includes:
if the second sending node has a second data frame to be sent to the second receiving node, receiving, by the second receiving node, the second data frame sent by the second sending node after the transmission timeslot starts.

In the foregoing solution, if the second sending node in the transmission node list has a second data frame to be sent to the second receiving node, the second sending node sends the second data frame to the second receiving node after the transmission timeslot allocated to the second sending node starts, and the second receiving node receives the second data frame sent by the second sending node after the transmission timeslot starts.

Optionally, the first data frame includes a third field, and the third field is used to indicate whether the first data frame carries the first indication information.

A third aspect of this application provides a sending node, where the sending node is a second sending node, and the second sending node includes:
a sending module, configured to send an access request and/or a second data frame to a second receiving node based on first indication information when a first sending node sends a first data frame to a first receiving node, where the first sending node and the second receiving node are the same node, and the first indication information includes at least one of an access node list or a transmission node list; and
an obtaining module, configured to obtain second indication information from the second receiving node, where the second indication information includes information used to indicate whether the access request and/or the second data frame are/is sent successfully.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the obtaining module is specifically configured to:
when the first receiving node sends an acknowledgement frame to the first sending node, receive the second indication information sent by the second receiving node; or
when the first sending node sends a first data frame to the first receiving node next time, obtain the second indication information from the second receiving node, where the second indication information is carried in the first data frame.

Optionally, the obtaining module is further configured to:
obtain the first indication information from the second receiving node, where the first indication information is carried in the first data frame; or
obtain the first indication information from the second receiving node, where the first indication information is carried in previous second indication information, and the previous second indication information is second indication information sent by the second receiving node to the second sending node when the first receiving node sends an acknowledgement frame to the first sending node previous time.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the sending module is specifically configured to:
if the access node list includes a first field, and the first field indicates that the second sending node is allowed to send the access request, randomly select an access timeslot, and send the access request in the access timeslot to the second receiving node; or
if the access node list includes the first field and a second field, where the second field is used to indicate a collision queue, and the collision queue is used to indicate a sequence of resending access requests by second sending nodes that have sent the access requests but the sent access requests collide, randomly select, by the second sending node arranged at a queue head of the collision queue, an access timeslot, and send the access request in the access timeslot to the second receiving node.

Optionally, the channel configuration information indicates that the channel includes at least one access timeslot, and the access node list indicates information about a second sending node that is allowed to send an access request to the second receiving node; and
the sending module is specifically configured to:
send, by an i^{th} second sending node, the access request in an i^{th} access timeslot to the second receiving node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the sending module is specifically configured to:
send, by the second sending node in the transmission node list, the second data frame in the transmission timeslot to the second receiving node.

Optionally, the channel configuration information indicates that the channel includes at least one transmission timeslot, and the transmission node list indicates information about a second sending node that is allowed to send the second data frame to the second receiving node; and
the sending module is specifically configured to:
if the second sending node has a second data frame to be sent to the second receiving node, send, by the second sending node, the second data frame to the second receiving node after the transmission timeslot starts.

Optionally, the first data frame includes a third field, and the third field is used to indicate whether the first data frame carries the first indication information.

For beneficial effects of the sending node provided by the third aspect and each possible implementation of the third aspect, refer to beneficial effects brought by the first aspect and each possible implementation of the first aspect. Details are not described again herein.

A fourth aspect of this application provides a receiving node, where the receiving node is a second receiving node, and the second receiving node includes:
a receiving module, configured to: when a first sending node sends a first data frame to a first receiving node, receive an access request and/or a second data frame sent by a second sending node based on first indication information, where the first indication information includes at least one of an access node list or a transmission node list, and the first sending node and the second receiving node are the same node; and
a sending module, configured to send second indication information to the second sending node, where the second indication information includes information used to indicate whether the access request and/or the second data frame are/is sent successfully.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the sending module is specifically configured to:
when the first receiving node sends an acknowledgement frame to the first sending node, send the second indication information to the second sending node; or
when the first sending node sends a first data frame to the first receiving node next time, send the second indication information to the second sending node, where the second indication information is carried in the first data frame.

Optionally, the sending module is further configured to:
send the first indication information to the second sending node, where the first indication information is carried in the first data frame sent by the first sending node to the first receiving node; or
when the first receiving node sends an acknowledgement frame to the first sending node previous time, send second indication information to the second sending node, where the second indication information carries the first indication information.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the receiving module is specifically configured to:
if the access node list includes a first field, and the first field indicates that the second sending node is allowed to send the access request, receive, in an access timeslot, the access request sent by the second sending node, where the access timeslot is an access timeslot randomly selected by the second sending node; or
if the access node list includes the first field and a second field, where the second field is used to indicate a collision queue, and the collision queue is used to indicate a sequence of resending access requests by second sending nodes that have sent the access requests but the sent access requests collide, receive, in an access timeslot, the access request sent by the second sending node, where the access timeslot is an access timeslot randomly selected by the second sending node arranged at a queue head of the collision queue.

Optionally, the channel configuration information indicates that the channel includes at least one access timeslot, and the access node list indicates information about a second sending node that is allowed to send an access request to the second receiving node; and
the receiving module is specifically configured to:
receive, in an i^{th} access timeslot, the access request sent by an i^{th} second sending node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the receiving module is specifically configured to:
receive the second data frame sent in the transmission timeslot by the second sending node in the transmission node list.

Optionally, the channel configuration information indicates that the channel includes at least one transmission timeslot, and the transmission node list indicates information about a second sending node that is allowed to send the second data frame to the first sending node; and
the receiving module is specifically configured to:
if the second sending node has a second data frame to be sent to the second receiving node, receive the second data frame sent by the second sending node after the transmission timeslot starts.

Optionally, the first data frame includes a third field, and the third field is used to indicate whether the first data frame carries the first indication information.

For beneficial effects of the receiving node provided by the fourth aspect and each possible implementation of the fourth aspect, refer to beneficial effects brought by the second aspect and each possible implementation of the second aspect. Details are not described again herein.

A fifth aspect of this application provides a sending node, including:
a transmitter, configured to send, by a second sending node, an access request and/or a second data frame to a second receiving node based on first indication information when a first sending node sends a first data frame to a first receiving node, where the first sending node and the second receiving node are the same node, and the first indication information includes at least one of an access node list or a transmission node list; and
a receiver, configured to obtain second indication information from the second receiving node, where the second indication information includes information used to indicate whether the access request and/or the second data frame are/is sent successfully.

In a specific implementation, the sending node may further include a memory and a processor, where a quantity of processors is at least one, and the processor is configured to execute a computer-executable instruction stored in the memory, so that the sending node performs data interaction with the receiving node by using a communications interface, to perform the full duplex transmission method provided by the first aspect or each implementation of the first aspect. Optionally, the memory may be integrated in the processor.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the receiver is specifically configured to:
when the first receiving node sends an acknowledgement frame to the first sending node, receive the second indication information sent by the second receiving node; or
when the first sending node sends a first data frame to the first receiving node next time, obtain the second indication information from the second receiving node, where the second indication information is carried in the first data frame.

Optionally, the sending node further includes a processor, where
the processor is configured to:
obtain the first indication information from the second receiving node, where the first indication information is carried in the first data frame; or
obtain the first indication information from the second receiving node, where the first indication information is carried in previous second indication information, and the previous second indication information is second indication information sent by the second receiving node to the second sending node when the first receiving node sends an acknowledgement frame to the first sending node previous time.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the transmitter is specifically configured to:
if the access node list includes a first field, and the first field indicates that the second sending node is allowed to send the access request, randomly select an access timeslot, and send the access request in the access timeslot to the second receiving node; or
if the access node list includes the first field and a second field, where the second field is used to indicate a collision queue, and the collision queue is used to indicate a sequence of resending access requests by second sending nodes that have sent the access requests but the sent access requests collide, randomly select, by the second sending node arranged at a queue head of the collision queue, an access timeslot, and send the access request in the access timeslot to the second receiving node.

Optionally, the channel configuration information indicates that the channel includes at least one access timeslot, and the access node list indicates information about a second sending node that is allowed to send an access request to the second receiving node; and
the transmitter is specifically configured to:
send, by an i^{th} second sending node, the access request in an i^{th} access timeslot to the second receiving node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the transmitter is specifically configured to:
send, by the second sending node in the transmission node list, the second data frame in the transmission timeslot to the second receiving node.

Optionally, the channel configuration information indicates that the channel includes at least one transmission timeslot, and the transmission node list indicates information about a second sending node that is allowed to send the second data frame to the second receiving node; and
the transmitter is specifically configured to:
if the second sending node has a second data frame to be sent to the second receiving node, send the second data frame to the second receiving node after the transmission timeslot starts.

Optionally, the first data frame includes a third field, and the third field is used to indicate whether the first data frame carries the first indication information.

For beneficial effects of the sending node provided by the fifth aspect and each possible implementation of the fifth aspect, refer to beneficial effects brought by the first aspect and each possible implementation of the first aspect. Details are not described again herein.

A sixth aspect of this application provides a receiving node, where the receiving node is a second receiving node, and the second receiving node includes:
a receiver, configured to: when a first sending node sends a first data frame to a first receiving node, receive an access request and/or a second data frame sent by a second sending node based on first indication information, where the first indication information includes at least one of an access node list or a transmission node list, and the first sending node and the second receiving node are the same node; and
a transmitter, configured to send second indication information to the second sending node, where the second indication information includes information used to indicate whether the access request and/or the second data frame are/is sent successfully.

In a specific implementation, the receiving node may further include a memory and a processor, where a quantity of processors is at least one, and the processor is configured to execute an executable instruction stored in the memory, so that the receiving node performs data interaction with the sending node by using a communications interface, to perform the full duplex transmission method provided by the second aspect or each implementation of the second aspect. Optionally, the memory may be further integrated in the processor.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the transmitter is specifically configured to:
when the first receiving node sends an acknowledgement frame to the first sending node, send the second indication information to the second sending node; or
when the first sending node sends a first data frame to the first receiving node next time, send the second indication information to the second sending node, where the second indication information is carried in the first data frame.

Optionally, the transmitter is specifically configured to:
send the first indication information to the second sending node, where the first indication information is carried in the first data frame sent by the first sending node to the first receiving node; or
when the first receiving node sends an acknowledgement frame to the first sending node previous time, send second indication information to the second sending node, where the second indication information carries the first indication information.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the receiver is specifically configured to:
if the access node list includes a first field, and the first field indicates that the second sending node is allowed to send the access request, receive, in an access timeslot, the access request sent by the second sending node, where the access timeslot is an access timeslot randomly selected by the second sending node; or
if the access node list includes the first field and a second field, where the second field is used to indicate a collision queue, and the collision queue is used to indicate a sequence of resending access requests by second sending nodes that have sent the access requests but the sent access requests collide, receive, in an access timeslot, the access request sent by the second sending node, where the access timeslot is an access timeslot randomly selected by the second sending node arranged at a queue head of the collision queue.

Optionally, the channel configuration information indicates that the channel includes at least one access timeslot, and the access node list indicates information about a second sending node that is allowed to send an access request to the second receiving node; and
the receiver is specifically configured to:
receive, in an i^{th} access timeslot, the access request sent by an i^{th} second sending node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the receiver is specifically configured to:
receive the second data frame sent in the transmission timeslot by the second sending node in the transmission node list.

Optionally, the channel configuration information indicates that the channel includes at least one transmission timeslot, and the transmission node list indicates information about a second sending node that is allowed to send the second data frame to the first sending node; and
the receiver is specifically configured to:
if the second sending node has a second data frame to be sent to the second receiving node, receive the second data frame sent by the second sending node after the transmission timeslot starts.

Optionally, the first data frame includes a third field, and the third field is used to indicate whether the first data frame carries the first indication information.

For beneficial effects of the sending node provided by the sixth aspect and each possible implementation of the sixth aspect, refer to beneficial effects brought by the second aspect and each possible implementation of the second aspect. Details are not described again herein.

A seventh aspect of this application provides a sending node, including at least one processing component (or chip) configured to perform the method in the first aspect or each possible implementation of the first aspect.

An eighth aspect of this application provides a receiving node, including at least one processing component (or chip) configured to perform the method in the second aspect or each possible implementation of the second aspect.

A ninth aspect of this application provides a readable storage medium, where the readable storage medium stores an executable instruction; and when at least one processor of a sending node executes the instruction, the sending node performs the full duplex transmission method provided by the first aspect or each implementation of the first aspect.

A tenth aspect of this application provides a readable storage medium, where the readable storage medium stores an executable instruction; and when at least one processor of a receiving node executes the instruction, the receiving node performs the full duplex transmission method provided by the second aspect or each implementation of the second aspect.

An eleventh aspect of this application provides a program product, where the program product includes an executable instruction, and the executable instruction is stored in a readable storage medium. At least one processor of a sending node may read the executable instruction from the readable storage medium, and the at least one processor executes the executable instruction so that the sending node implements the full duplex transmission method provided by the first aspect or each implementation of the first aspect.

A twelfth aspect of this application provides a program product, where the program product includes an executable instruction, and the executable instruction is stored in a readable storage medium. At least one processor of a receiving node may read the executable instruction from the readable storage medium, and the at least one processor executes the executable instruction so that the receiving node implements the full duplex transmission method provided by the second aspect or each implementation of the second aspect.

A thirteenth aspect of this application provides a network system, where the network system includes the sending node and the receiving node in the foregoing aspects.

### DESCRIPTION OF DRAWINGS

FIG. 1 is a schematic diagram of a topology of full duplex transmission;
FIG. 2 is a schematic structural diagram of a visible light domain in a star topology;
FIG. 3 is a schematic structural diagram of a visible light domain in a mesh (mesh) topology;
FIG. 4 is a signaling flowchart of a full duplex transmission method according to Embodiment 1 of this application;
FIG. 5 is a schematic diagram of full duplex transmission;
FIG. 6 is a possible format of a first data frame;
FIG. 7 is another schematic diagram of full duplex transmission;
FIG. 8 is a schematic structural diagram of a sending node according to Embodiment 1 of this application;
FIG. 9 is a schematic structural diagram of a receiving node according to Embodiment 1 of this application;
FIG. 10 is a schematic structural diagram of a sending node according to Embodiment 2 of this application; and
FIG. 11 is a schematic structural diagram of a receiving node according to Embodiment 2 of this application.

### DESCRIPTION OF EMBODIMENTS

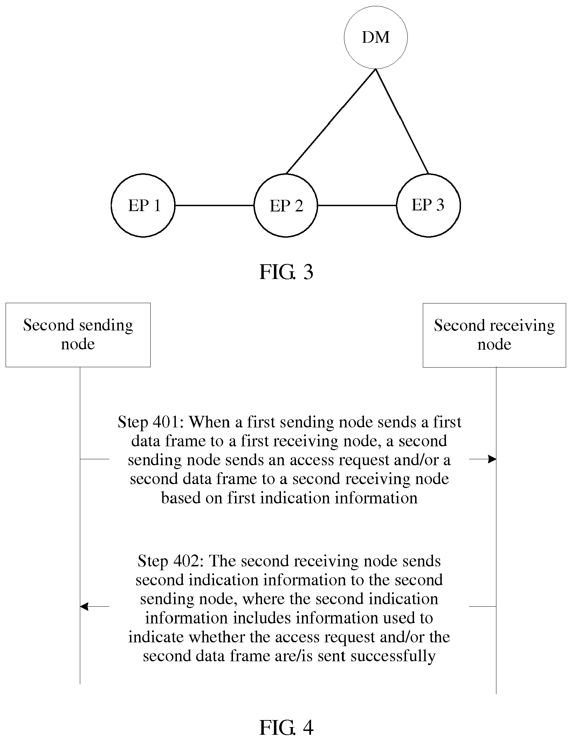

FIG. 2 is a schematic structural diagram of a visible light domain in a star topology. FIG. 3 is a schematic structural diagram of a visible light domain in a mesh (mesh) topology. As shown in FIG. 2 and FIG. 3, a full duplex transmission method and apparatus provided by embodiments of this application are applicable to both the visible light domain shown in FIG. 2 and the visible light domain shown in FIG. 3. The visible light domain includes a visible light domain master node (Domain Master, DM) and a plurality of endpoint nodes (EndPoint, EP). Generally, for the visible light domain, a light emitting diode (Light Emitting Diode, LED) light located at a ceiling plays a role of the DM, and the EPs are various consumer electronic products integrating visible light communication (Visible Light Communication, VLC) transceivers, for example, a smartphone, a tablet computer, and a personal computer (personal computer, PC). The DM provides visible light network access for the EP, and manages and maintains running of the domain. The EP accesses the DM to connect to the visible light domain.

In an embodiment of this application, a scenario shown in FIG. 2 is used as an example for description. A specific implementation in a scenario shown in FIG. 3 is similar to the scenario shown in FIG. 2, and is not described again herein. As shown in FIG. 2, it is assumed that half duplex transmission between the DM and an EP 1 has been established, and that the half duplex transmission is contention-free-based transmission. To be specific, a resource used by the DM for sending traffic to the EP 1 is a contention-free transmission opportunity (Contention-Free Transmission Opportunity, CFTXOP). In a time period in which the DM sends a data frame to the EP 1, other EPs (for example, an EP 2 and an EP3) also send data frames to the DM. Therefore, the DM can implement simultaneous reception and transmission, that is, full duplex transmission. In this application, when the DM performs full duplex transmission, transmission in which the DM sends a data frame to the EP 1 is referred to as first transmission, the DM is a first sending node, and the EP 1 is a first receiving node. Transmission in which other nodes (for example, the EP 2 and the EP 3) send data frames to the DM is referred to as second transmission, the other nodes are second sending nodes, and the DM is a second receiving node. As can be learned from FIG. 2, the first sending node and the second receiving node are the same node, and are both the DM, and the DM needs to have a full duplex capability. It should be noted that, the first sending node and the second receiving node are not limited to the DM. As long as a node has a full duplex capability, the node may serve as both the first sending node and the second receiving node to perform full duplex transmission. This is not limited in this application.

Referring to FIG. 2, when a plurality of second sending nodes (for example, the two nodes EP 2 and EP 3) all want to send data to the first sending node in the time period in which the first sending node sends data to the first receiving node, a collision occurs if the plurality of second sending nodes send data to the first sending node simultaneously. Therefore, data reception failure is definitely caused on the first sending node. Therefore, how to select a most appropriate second sending node is a technical problem urgently to be resolved.

Therefore, the full duplex transmission method and apparatus provided by this application are intended to resolve a technical problem in the prior art about how to establish full duplex transmission when there are a plurality of second sending nodes.

Specific embodiments are used below to describe in detail the technical solutions of this application. The following several specific embodiments may be combined with each other, and a same or similar concept or process may not be described repeatedly in some embodiments.

FIG. 4 is a signaling flowchart of a full duplex transmission method according to Embodiment 1 of this application. This embodiment of this application provides a full duplex transmission method, where the method may be performed by any apparatus performing a full duplex transmission method, and the apparatus may be implemented by software and/or hardware. In this embodiment, a second sending node may be any node having a full duplex transmission capability in a network. As shown in FIG. 4, the method in this embodiment may include the following steps.

Step 401: When a first sending node sends a first data frame to a first receiving node, a second sending node sends an access request and/or a second data frame to a second receiving node based on first indication information.

The first sending node and the second receiving node are the same node, and the first indication information includes at least one of an access node list or a transmission node list.

In this embodiment, the access node list is used to indicate which second sending nodes may send access requests in access timeslots to the second receiving node. The transmission node list is used to indicate which second sending nodes may send data frames in transmission timeslots to the second receiving node.

Optionally, the first indication information may further include a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the first indication information may further include channel configuration information, and the channel configuration information is used to indicate at least one of the following information: (1) whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node; (2) a quantity of access timeslots on the access channel if the channel includes the access channel; and (3) a quantity of transmission timeslots on the transmission channel if the channel includes the transmission channel.

When the first sending node sends the first data frame to the first receiving node, the second sending node determines, based on the first indication information, which second sending nodes may send access requests to the second receiving node, and which second sending nodes may send second data frames to the second receiving node. For example, if some nodes are in the access node list, the nodes serve as second sending nodes, and send access requests in access timeslots of the access channel to the second receiving node; or if some nodes are in the transmission node list, the nodes serve as second sending nodes, and send data frames in transmission timeslots of the transmission channel to the second receiving node. Therefore, when sending the first data frame to the first receiving node, the first sending node also receives the access request and/or the second data frame sent by the second sending node, thereby completing full duplex transmission.

Step 402: The second receiving node sends second indication information to the second sending node, where the second indication information includes information used to indicate whether the access request and/or the second data frame are/is sent successfully.

In this embodiment, after the second sending node sends the access request and/or the second data frame to the second receiving node, the second receiving node sends the second indication information to the second sending node, so that the second sending node knows, based on the second indication information, whether the access request and/or the second data frame are/is sent successfully.

Optionally, the second sending node obtains the second indication information from the second receiving node in the following two different manners:

In a first manner, when the first receiving node sends an acknowledgement frame to the first sending node, the second sending node receives the second indication information sent by the second receiving node.

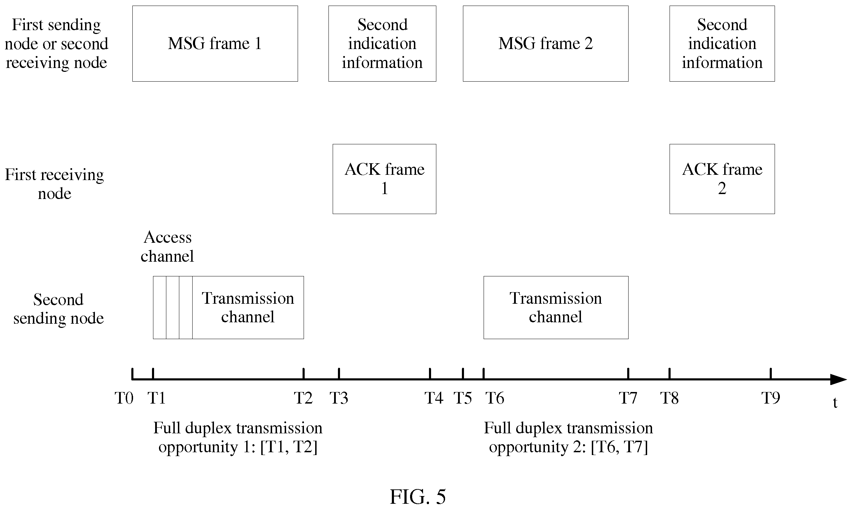

Specifically, FIG. 5 is a schematic diagram of full duplex transmission. As shown in FIG. 2 and FIG. 5, an MSG frame 1 is the first data frame sent by the first sending node to the first receiving node, and an ACK frame 1 is the acknowledgement frame returned by the first receiving node to the first sending node. When the first receiving node sends the acknowledgement frame ACK frame 1 to the first sending node, the second receiving node sends the second indication information to the second sending node.

In a second manner, when the first sending node sends a first data frame to the first receiving node next time, the second sending node obtains the second indication information from the second receiving node, where the second indication information is carried in the first data frame.

Specifically, after the second sending node sends the access request and/or the second data frame to the second receiving node, the second receiving node, that is, the first sending node, adds the second indication information to the first data frame when sending the first data frame to the first receiving node next time, and sends the first data frame to the first receiving node, and the second sending node obtains the second indication information by parsing the first data frame. As shown in FIG. 5, in this embodiment, a time period (that is, [T1, T2] in FIG. 5) in which the first sending node sends the MSG frame 1 to the first receiving node is referred to as a full duplex transmission opportunity 1. In this embodiment, a channel between the second sending node and the second receiving node in the full duplex transmission opportunity 1 is divided into two parts: an access channel and a transmission channel, where the access channel includes several (for example, three) access timeslots of equal duration, and the transmission channel also includes several (for example, 1) transmission timeslots of equal duration or unequal duration. The access timeslot is used by the second sending node to send an access request to the second receiving node, and the transmission timeslot is used by the second sending node to send a data frame to the second receiving node, where the data frame may be a physical frame carrying higher layer traffic, or may be a physical frame carrying a network management message or a control message. After the second sending node sends the access request and/or the second data frame to the second receiving node in the full duplex transmission opportunity 1, the first sending node adds the second indication information to an MSG frame 2 when sending the MSG frame 2 to the first receiving node in a full duplex transmission opportunity 2, and sends the MSG frame 2 to the first receiving node. It should be noted that, a destination node receiving payload information carried in the MSG frame 2 is the first receiving node, and a destination node receiving the second indication information carried in the MSG frame 2 is the second sending node. Because the MSG frame 2 needs to be received by both the first receiving node and the second sending node, the MSG frame 2 is preferably sent in a broadcast or multicast mode. Therefore, all nodes within coverage of a signal sent by the first sending node can receive the MSG frame 2, so that the second sending node can obtain the second indication information by parsing the MSG frame 2.

In the full duplex transmission method provided by this embodiment of this application, when the first sending node sends the first data frame to the first receiving node, the second sending node sends the access request and/or the second data frame to the second receiving node based on the first indication information. Therefore, the second sending node obtains the second indication information from the second receiving node, to learn whether the access request and/or the second data frame are/is sent successfully. Because the second sending node sends the access request and/or the second data frame to the second receiving node based on the first indication information, the first sending node receives the access request and/or the second data frame when sending the first data frame. In this way, full duplex transmission is completed. In addition, the full duplex transmission method in this application is applicable to both symmetric full duplex transmission between two nodes and asymmetric full duplex transmission between three nodes, thereby creating more full duplex transmission opportunities, and increasing a network throughput.

Optionally, before the second sending node sends the access request and/or the second data frame to the second receiving node based on the first indication information, the second sending node needs to first obtain the first indication information. In an actual application, the second sending node obtains the first indication information in the following several manners:

In a first manner, the second sending node obtains the first indication information from the second receiving node, where the first indication information is carried in the first data frame.

Specifically, the first sending node may add the first indication information to the first data frame and send the first data frame to the first receiving node, and the second sending node may obtain the first indication information by parsing the first data frame. In a specific implementation process, the first indication information may be carried in a frame header of the first data frame, or certainly may be carried in another position in the first data frame. As shown in FIG. 5, the first sending node may add the first indication information to the first data frame MSG frame 1 and send the MSG frame 1 to the first receiving node, and the second sending node may obtain the first indication information by parsing the MSG frame 1. A destination node receiving payload information carried in the MSG frame 1 is the first receiving node, and a destination node receiving the first indication information carried in the MSG frame 1 is the second sending node. Because the MSG frame 1 needs to be received by both the first receiving node and the second sending node, the MSG frame 1 is preferably sent in the broadcast or multicast mode. Therefore, all nodes within coverage of a signal sent by the first sending node can receive the MSG frame 1, so that the second sending node can obtain the first indication information by parsing the MSG frame 1. Because the first indication information is indicated in the MSG frame 1, after receiving the MSG frame 1, the second sending node needs to first parse the MSG frame 1 to obtain the first indication information from the MSG frame 1. This process requires a processing time. Therefore, the full duplex transmission opportunity 1 starts from a time T1 in FIG. 5 rather than from a time TO, where a time period from TO to T1 is the processing time required for receiving and parsing the MSG frame 1 by the second sending node.

Optionally, the first data frame includes a third field, and the third field is used to indicate whether the first data frame carries the first indication information.

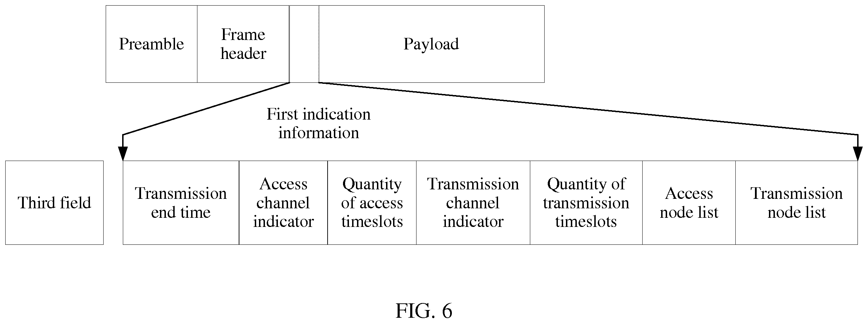

Specifically, FIG. 6 is a possible format of a first data frame. As shown in FIG. 6, an example in which the first data frame is an MSG frame is used for description. It may be understood by persons skilled in the art that, an MSG frame includes three parts: a preamble, a frame header, and a payload. The frame header includes a plurality of specific fields. In this embodiment, the third field is added to the frame header of the MSG frame. The third field may be added after the frame header, or one bit in a reserved field in the frame header may be directly used as the field. The third field is used to indicate whether the first indication information is carried after the frame header of the MSG frame. For example, when the third field is set to "1", it indicates that the first indication information exists after the frame header; or when the third field is set to "0", it indicates that the first indication information does not exist after the frame header; or the third field may be set to another value to indicate whether the first indication information exists. This is not limited herein in this embodiment.

Optionally, fields specifically included in the first indication information are: a transmission end time, channel configuration information, an access node list, and a transmission node list. The channel configuration information further includes an access channel indicator, a quantity of access timeslots, a transmission channel indicator, and a quantity of transmission timeslots. The channel is a channel between the second sending node and the second receiving node. The access channel indicator is used to indicate whether the channel includes an access channel. The quantity of access timeslots is used to indicate the quantity of access timeslots if the access channel indicator indicates that the access channel is included. The transmission channel indicator is used to indicate whether the channel includes a transmission channel. The quantity of transmission timeslots is used to indicate the quantity of transmission timeslots if the transmission channel indicator indicates that the transmission channel is included.

In a second manner, the second sending node obtains the first indication information from the second receiving node, where the first indication information is carried in previous second indication information, and the previous second indication information is second indication information sent by the second receiving node to the second sending node when the first receiving node sends an acknowledgement frame to the first sending node previous time.

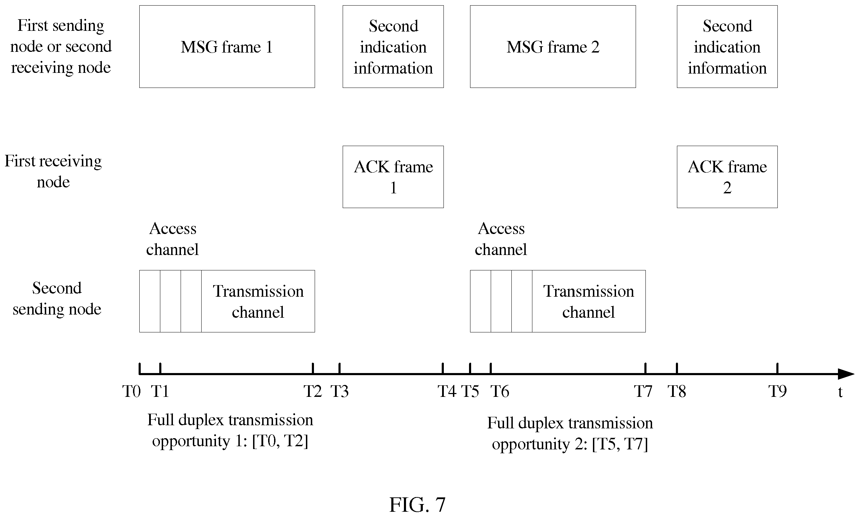

Specifically, when the first receiving node sends a previous acknowledgement frame to the first sending node, the second receiving node sends the second indication information to the second sending node. In this case, the second receiving node adds the first indication information to the second indication information and sends the second indication information to the second sending node; and after receiving the second indication information, the second sending node may obtain the first indication information by parsing the second indication information. FIG. 7 is another schematic diagram of full duplex transmission. As shown in FIG. 7, when the first receiving node sends an acknowledgement frame ACK frame 1 to the first sending node, the second receiving node sends second indication information to the second sending node, where the second indication information carries next first indication information. In this case, the first indication information includes at least one of an access node list or a transmission node list corresponding to a full duplex transmission opportunity 2. In addition, because the first indication information is carried in previous second indication information, the second sending node does not need to obtain the first indication information by receiving and parsing an MSG frame 2. Therefore, the second sending node does not require a processing time between TO and T1. Therefore, the full duplex transmission opportunity starts from the time TO in FIG. 7.

In addition, in an actual application, alternatively, the second sending node may obtain the access node list or the transmission node list in both the first manner and the second manner, or obtain the transmission end time, the channel configuration information, the access node list, or the transmission node list in both the first manner and the second manner. For example, the second sending node obtains at least one of the access node list or the transmission node list by using the previous second indication information, and obtains remaining content of the access node list or the transmission node list by using current first indication information. For example, the first sending node may add the access node list to the previous second indication information, and add the transmission node list to the current first indication information. In this case, the second sending node obtains the access node list or the transmission node list by using the previous second indication information and the current first indication information. In addition, if the second sending node obtains the transmission end time, the channel configuration information, the access node list, or the transmission node list in both the first manner and the second manner, the second sending node may obtain at least one of the transmission end time, the channel configuration information, the access node list, or the transmission node list by using the previous second indication information, and obtain remaining content of the transmission end time, the channel configuration information, the access node list, or the transmission node list by using the current first indication information. For example, the first sending node may add the transmission end time to the previous second indication information, and add the channel configuration information, the access node list, and the transmission node list to the current first indication information; and the second sending node obtains the transmission end time, the channel configuration information, the access node list, or the transmission node list by using the previous second indication information and the current first indication information. Certainly, the first sending node may further add at least one of the transmission end time, the channel configuration information, the access node list, or the transmission node list to second indication information at first N times, and add remaining content of the transmission end time, the channel configuration information, the access node list, or the transmission node list to first indication information at first T times. Therefore, the second sending node only needs to obtain the transmission end time, the channel configuration information, the access node list, and the transmission node list before sending the access request or the second data frame this time. At which time the content is specifically carried in first indication information or second indication information is not limited herein in this embodiment.

Optionally, the first indication information includes channel configuration information, and several possible implementations of the channel configuration information are as follows:

In a first implementation, a channel configuration is fixed and unchanged.

Specifically, the channel is a channel between the second sending node and the second receiving node. In this manner, whether the channel includes an access channel, whether the channel includes a transmission channel, a quantity of access timeslots if the access channel is included, and a quantity of transmission timeslots if the transmission channel is included, are all known parameters in a network, and do not change with a change of the network. The second sending node only needs to obtain the known parameters by using a beacon or another network management message. Therefore, in this case, the first indication information does not need to include the channel configuration information.

More specifically, the fixed configuration of the channel may include the following several cases:
(1) The channel includes n1 (n1 ≥ 1) access timeslots and includes n2 (n2 ≥ 1) transmission timeslots;
(2) N1 (N1 ≥ 1) continuous channels include only n1 access timeslots and 0 transmission timeslots; and
(3) N2 (N2 ≥ 1) continuous channels include only n2 transmission timeslots and 0 access timeslots.

In a second implementation, the channel may be configured flexibly, and the second receiving node changes a channel configuration periodically or in an event trigger manner.

Specifically, the second receiving node changes the channel configuration periodically. For example, the second receiving node may update the configuration of the channel between the second sending node and the second receiving node in every N1 channels.

Alternatively, the second receiving node changes the channel configuration in the event trigger manner. For example, when a first condition is satisfied, N1 (N1 ≥ 1) continuous channels include only n1 access timeslots and 0 transmission timeslots; or when a second condition is satisfied, N2 (N2 ≥ 1) continuous channels include only n2 transmission timeslots and 0 access timeslots. In a possible implementation, the first condition is: the transmission node list is null, that is, no node successfully sending an access request message exists, but the collision queue is not null, and there are a plurality of collisions; in this case, the second receiving node may set the channel to include only an access channel. Therefore, a quantity of access timeslots can increase, and more second sending nodes can be allowed to send access requests, thereby quickly reducing a quantity of colliding nodes in the collision queue. In another possible implementation, the second condition is: access timeslots on several continuous channels are all idle, that is, no second sending node sends an access request to the second receiving node, but the transmission node list is not null; in this case, the second receiving node may set the channel to include only a transmission channel. Therefore, nodes in the transmission node list can obtain more transmission opportunities, and data transmission of the nodes in the transmission node list is accelerated.

Because the second receiving node changes the channel configuration periodically or in the event trigger manner, flexibility of the channel configuration can be improved, and the network throughput is increased.

In a third implementation, a channel configuration may implement support for priorities.

The support for priorities by the channel configuration may be implemented on an access channel, or may be implemented on a transmission channel, or may be implemented on both an access channel and a transmission channel.

A possible implementation of the support for priorities on the access channel is: the second receiving node may indicate, in the first indication information, access priorities of different access timeslots. For example, there are four access timeslots in total, and four priorities are defined for traffic transmitted in the network: a priority 0, a priority 1, a priority 2, and a priority 3, where the priority 3 is a highest priority. In this case, the second receiving node may specify that one access timeslot (or a plurality of access timeslots) can only be used to send data whose traffic priority is 3. Therefore, only a second sending node whose priority of traffic to be transmitted is 3 can send an access request message in the access timeslot. Likewise, the second receiving node may also specify that another access timeslot (or a plurality of access timeslots) can allow only a second sending node whose traffic priority is 2 to send an access request, and so on.

The support for priorities on the transmission channel includes two types: (1) The second receiving node may indicate, in the first indication information, priorities of different transmission timeslots. For example, the transmission channel is shared by three nodes A, B, and C in total, and the second receiving node indicates that a transmission timeslot allocated to the second sending node A allows only the second sending node A to send a data frame whose priority is 2 or higher. If the second sending node A has no data frame whose priority is 2 or higher, the second sending node A does not use the transmission timeslot to perform transmission. An analogy may be made for transmission timeslots of other second sending nodes. (2) The second receiving node implements the support by adjusting a sequence of second sending nodes in the transmission list and a quantity of transmission timeslots obtained by each second sending node. For example, when scheduling a transmission timeslot for a second sending node, the second receiving node arranges a second sending node having a high traffic priority at a queue head (or a front position) of the transmission node list. Therefore, the second sending node having the high traffic priority can send its data frame earlier, and an access delay is reduced. Alternatively, more transmission timeslots may be allocated to the second sending node having the high traffic priority. For example, for a second sending node having the priority 0, regardless of whether the node has more data frames to be sent to the second receiving node, only one transmission timeslot can be allocated to the second sending node at a time. However, for a second sending node having the traffic priority 3, if the second sending node indicates, in a data frame, that more data frames need to be sent, more transmission timeslots may be allocated to the node, and transmission timeslots may be allocated to other second sending nodes even after the node completes transmission of all data frames.

In the full duplex transmission method provided by this embodiment, the second receiving node may flexibly adjust the channel configuration based on a quantity of second sending nodes that send access requests and a quantity of data frames to be sent by the second sending nodes. For example, there is only an access channel, there is only a transmission channel, there are both an access channel and a transmission channel, a quantity of access timeslots is adjustable, or a quantity of transmission timeslots is adjustable. In this way, the channel is flexibly configured and can be dynamically adjusted. Therefore, system flexibility can be improved, and the system throughput can be further increased.

The following describes in detail a process in which a second sending node sends an access request and/or a second data frame to a second receiving node based on first indication information in several different implementations.
(1) In a first possible implementation, an access node list may be used to indicate which second sending nodes can randomly select an access timeslot to send an access request to the second receiving node.

In this implementation, the second sending node has three different states, specifically: (1) an access state, which means that the second sending node has not sent an access request to the second receiving node yet, and waits for sending an access request to the second receiving node; (2) a collision state, which means that the second sending node has sent an access request to the second receiving node, but does not send the access request successfully, and therefore needs to resend the access request; and (3) a transmission state, means that the second sending node has successfully sent an access request to the second receiving node, and waits for the second receiving node to allocate a transmission timeslot for sending data.

The second sending node in the access state determines, based on a first field in the first indication information, whether the second sending node itself is allowed to randomly select an access timeslot from access timeslots and send an access request to the second receiving node. If the first field in the first indication information indicates that the second sending node in the access state is not allowed to send an access request to the second receiving node, the second sending node in the access state waits for next first indication information.

The second sending node in the collision state needs to be queued in a collision queue, and waits for retransmitting an access request. Based on different positions in which second sending nodes are queued in the collision queue, the second sending nodes in the collision state may be further classified in to two types. A first type of second sending node is arranged at a queue head of the collision queue. For this type of node, as long as the first indication information indicates that access timeslots exist on a channel, this type of second sending node may randomly select an access timeslot and send an access request to the second receiving node. A second type of second sending node is arranged in a non-head position in the collision queue. This type of node cannot randomly select an access timeslot or send an access request to the second receiving node, and it can send an access request only after waiting for being arranged at the queue head of the collision queue and becoming the first type of node in the collision state. Before becoming the first type of node, it needs to determine a current length of the collision queue and its position in the collision queue based on status information fed back in second indication information. Specifically, a method for determining the length of the collision queue by the node is: when the length of the collision queue is 0, if access requests collide in n access timeslots on an access channel, the length of the collision queue is updated to n; or when the length of the collision queue is not 0, every time the second receiving node sends second indication information, 1 is subtracted from the length of the collision queue. Specifically, a method for determining, by the node, the position in which the node is queued in the collision queue is: every time the second receiving node sends first indication information, if the second type of node has just sent an access request in a corresponding access timeslot, and learned, based on subsequent second indication information, that the access request collides, it is located at an end of the collision queue. The second type of node moves forward to a preceding position in the collision queue if it does not send an access request in a corresponding access timeslot.

The second sending node in the transmission state has sent an access request and the sending is successful, and therefore it enters a transmission node list. The second receiving node allocates a transmission timeslot to this type of second sending node for sending a second data frame. In the transmission node list, if the second sending node is arranged at a queue head or front positions in the transmission node list, the second sending node may send a second data frame in the current transmission timeslot; or if the second sending node is arranged at an end of the transmission node list, the second sending node sends a second data frame to the second receiving node only after waiting for being arranged at a queue head of the transmission node list.

Based on different content included in the access node list, manners of sending the access request by the second sending node to the second receiving node include the following two manners:

In a first manner, when channel configuration information indicates that the channel includes at least one access timeslot, if the access node list includes a first field, and the first field indicates that the second sending node is allowed to send the access request, the second sending node in the access state randomly selects an access timeslot, and sends the access request in the access timeslot to the second receiving node.

Specifically, if access requests sent by a plurality of second sending nodes collide, that is, when the length of the collision queue is not 0, the second sending nodes in the access state are not allowed to send access requests to the second receiving node, because joining of the nodes causes an increase of a quantity of second sending nodes that need to send access requests, and this further increases an access request collision probability. The first field is set to forbid the second sending node in the access state to send an access request and allow only the second sending node in the collision state to send an access request. Therefore, a collision already generated in a network can be resolved quickly, and the network stability and throughput are increased. Therefore, it may be indicated, based on different values of the first field, whether the second sending node in the access state is allowed to send an access request to the second receiving node. For example, if a value of the first field is "1", it indicates that the second sending node in the access state is allowed to send an access request to the second receiving node; or if a value of the first field is "0", it indicates that the second sending node in the access state is not allowed to send an access request to the second receiving node. Alternatively, when a value of the first field is "0", it indicates that the second sending node in the access state is allowed to send an access request to the second receiving node; or when a value of the first field is "1", it indicates that the second sending node in the access state is not allowed to send an access request to the second receiving node. Certainly, other numeric values may also be used to indicate whether the second sending node in the access state is allowed to send an access request to the second receiving node. This is not limited in this application.

If the first field indicates that the second sending node in the access state is allowed to send an access request, the second sending node randomly selects an access timeslot, and sends an access request in the selected access timeslot to the second receiving node, where the second sending node may randomly select one or more access timeslots. In this case, the length of the collision queue is 0. Therefore, the second sending node in the access state may be allowed to send an access request to the second receiving node.

In a second manner, when channel configuration information indicates that the channel includes at least one access timeslot, if the access node list includes a first field and a second field, where the second field is used to indicate the collision queue, and the collision queue is used to indicate a sequence of resending access requests by second sending nodes that have sent the access requests but the sent access requests collide, the second sending node arranged at the queue head of the collision queue randomly selects an access timeslot, and sends an access request in the access timeslot to the second receiving node.

Specifically, the first field has a function similar to that in the first manner, and is used to indicate whether the second sending node in the access state is allowed to send an access request to the second receiving node; and the second field is used to indicate the collision queue, and the collision queue is used to indicate the sequence of resending the access requests by the second sending nodes that have sent the access requests but the sent access requests collide. For example, if a collision occurs when second sending nodes A and B send access requests in a first access timeslot to the second receiving node, the second sending nodes A and B enter the collision queue; if a collision also occurs when second sending nodes C and D send access requests in a second access timeslot to the second receiving node, the second sending nodes C and D also enter the collision queue; and the second sending nodes A and B are arranged at the queue head of the collision queue, and the second sending nodes C and D are arranged after the second sending nodes A and B. Certainly, when being arranged in the collision queue, the second sending nodes C and D may be alternatively arranged at the queue head of the collision queue, and the second sending nodes A and B are arranged after the second sending nodes C and D.

Optionally, the second field may be in a format shown in Table 1.

**Table 1**

| Field | Value | Meaning |
|---|---|---|
| Status of an access timeslot 1 | A value "1" indicates that a collision occurs in the access timeslot 1; and | Indicates whether a collision occurs in a first access timeslot on the access channel. |
| | a value "0" indicates that no collision occurs in the access timeslot 1; | |
| | or | |
| | a value "0" indicates that a collision occurs in the access timeslot 1; and | |
| | a value "1" indicates that no collision occurs in the access timeslot 1. | |
| Status of an access timeslot 2 | A value "1" indicates that a collision occurs in the access timeslot 1; and | Indicates whether a collision occurs in a second access timeslot on the access channel. |
| | a value "0" indicates that no collision occurs in the access timeslot 1; | |
| | or | |
| | a value "0" indicates that a collision occurs in the access timeslot 2; and | |
| | a value "1" indicates that no collision occurs in the access timeslot 2. | |
| ... | | |
| Status of an access timeslot m | A value "1" indicates that a collision occurs in the access timeslot 1; and | Indicates whether a collision occurs in a last access timeslot on the access channel. |
| | a value "0" indicates that no collision occurs in the access timeslot 1; | |
| | or | |
| | a value "0" indicates that a collision occurs in the access timeslot m; and | |
| | a value "1" indicates that no collision occurs in the access timeslot m. | |

When there is more than one collision in the collision queue, the second sending node arranged at the queue head of the collision queue randomly selects an access timeslot and sends an access request in the selected access timeslot to the second receiving node. In an embodiment, a sequence of arranging the second sending node in the collision queue may be defined by using the following several rules:
Rule 1: Arranging based on a time sequence of access timeslots.
   For example, a second sending node that collides in the access timeslot 1 is arranged at the head of the collision queue, and a second sending node that collides in the last access timeslot is arranged at the end of the collision queue.
Rule 2: A second sending node that collides in the last access timeslot is arranged at the head of the collision queue, and a second sending node that collides in the first access timeslot is arranged at the end of the queue.

In a specific implementation process, a second sending node that collides may be further arranged by using another rule based on an actual situation. A specific arrangement rule is not limited herein in this embodiment.

In addition, the format of the second field in Table 1 can indicate only two different states of an access timeslot, that is, a second sending node collides or does not collide in an access timeslot. Optionally, in a possible implementation, the second field may further indicate three different states: collision, success, and idle. The "collision" state indicates that at least two second sending nodes send access requests in the access timeslot; the "success" state indicates that only one second sending node sends an access request in the access timeslot; and the "idle" state indicates that no second sending node sends an access request in the access timeslot. Therefore, to indicate the foregoing three states, the second field requires at least two bits. The following uses two bits as an example for description. For example, when the second field is "00", it indicates "idle"; when the second field is "01", it indicates "collision"; or when the second field is "10", it indicates "success". Certainly, other combinations may also be used to indicate the three different states. This is not limited in this application.

In addition, regardless of whether the second field indicates two states or three states, a second sending node that sends an access request needs to determine, based on an indication of the second field, whether the access request sent by the second sending node is successfully received by the second receiving node. If the second sending node has sent an access request, and the sent access request collides, the second sending node further needs to determine, based on the second field, in which position in the collision queue the collision of the access request sent by the second sending node in an access timeslot is arranged. For example, if the foregoing rule 1 is used, the second sending node needs to learn how many collisions occur in access timeslots before the access timeslot in which the second sending node is located. If m collisions occur in the front access timeslots, the collision in the access timeslot in which the second sending node is located is arranged in an (m+1)^{th} position in the collision queue. However, if the foregoing rule 2 is used, the second sending node needs to learn how many collisions occur in access timeslots after the access timeslot in which the second sending node is located. If j collisions occur in the subsequent access timeslots, the collision in the access timeslot in which the second sending node is located is arranged in a (j+1)^{th} position in the collision queue.

Optionally, in the first possible implementation, the transmission node list indicates information about a second sending node that is allowed to send a second data frame to the second receiving node. It should be noted that, the transmission node list is significant only when the channel configuration information indicates that a transmission channel exists and the transmission channel includes at least one transmission timeslot.

When the channel configuration information indicates that the channel includes at least one transmission timeslot, the second sending node sends a second data frame to the second receiving node based on the first indication information, and the second sending node in the transmission node list sends a second data frame in the transmission timeslot to the second receiving node.

Specifically, the transmission channel may be divided into m transmission timeslots. When m is 1, only one second sending node can send a second data frame on the transmission channel. When m is greater than 1, the transmission channel is divided into a plurality of transmission timeslots of equal duration or unequal duration. Therefore, the transmission node list may have different formats based on a value relationship between a quantity of second sending nodes indicated in the transmission node list and a quantity of transmission timeslots.

In a first format, the quantity of second sending nodes indicated in the transmission node list is equal to the quantity of transmission timeslots; in this case, a second sending node uses only one transmission timeslot to send a second data frame to the second receiving node. Optionally, the format of the transmission node list may be shown in Table 2.

**Table 2**

| Field | Value | Meaning |
|---|---|---|
| Second sending node 1 | Node identifier of a second sending node | Indicates a node identifier of a second sending node that sends a second data frame in a first transmission timeslot on the transmission channel. |
| Second sending node 2 | Node identifier of a second sending node | Indicates a node identifier of a second sending node that sends a second data frame in a second transmission timeslot on the transmission channel. |
| ... | ... | ... |
| Second sending node m | Node identifier of a second sending node | Indicates a node identifier of a second sending node that sends a second data frame in a last transmission timeslot on the transmission channel. |

The node identifier of the second sending node may be a short address, or may be a long address.

In a second format, the quantity of second sending nodes indicated in the transmission node list is less than the quantity of transmission timeslots; in this case, one or some second sending nodes may send second data frames in a plurality of transmission timeslots to the second receiving node. Optionally, the format of the transmission node list may be shown in Table 3.

**Table 3**

| Field | Value | Meaning |
|---|---|---|
| Transmission timeslot 1 | Node identifier of a second sending node | Indicates a node identifier of a second sending node that sends a second data frame in a first transmission timeslot on the transmission channel. |
| Transmission timeslot 2 | Node identifier of a second sending node | Indicates a node identifier of a second sending node that sends a second data frame in a second transmission timeslot on the transmission channel. |
| ... | ... | ... |
| Transmission timeslot m | Node identifier of a second sending node | Indicates a node identifier of a second sending node that sends a second data frame in a last transmission timeslot on the transmission channel. |

The node identifier of the second sending node may be a short address, or may be a long address. It should be noted that, in Table 2, some values in the second column may be the same. To be specific, the second sending node can use a plurality of different transmission timeslots to send second data frames to the second receiving node.

In a third format, the quantity of second sending nodes indicated in the transmission node list is greater than the quantity of transmission timeslots; in this case, only a node arranged in a first position (or several front positions) in the list can send a second data frame on the transmission channel to the second receiving node. Other nodes in the transmission node list cannot send second data frames in transmission timeslots to the second receiving node. In addition, the other nodes in the transmission node list are nodes from which the second receiving node has successfully received access requests. The nodes are indicated in the transmission node list, so that the nodes can know that their access requests have been successfully received by the second receiving node. Optionally, the format of the transmission node list may be shown in Table 4 (Table 4 shows a case in which only a node at the queue head can transmit a second data frame).

**Table 4**

| Field | Value | Meaning |
|---|---|---|
| Second sending node 1 | Node identifier of a second sending node | Indicates a node identifier of a second sending node that sends a second data frame on the transmission channel |
| Second sending node 2 | Node identifier of a second sending node | Indicates a node identifier of a first second sending node whose access request is successfully received. |
| ... | ... | ... |
| Second sending node m | Node identifier of a second sending node | Indicates a node identifier of a last second sending node whose access request is successfully received. |

In conclusion, when the quantity of second sending nodes indicated in the transmission node list is less than or equal to the quantity of transmission timeslots, that is, when the manners in Table 2 and Table 3 are used, a second sending node in the transmission node list sends, to the second receiving node, a second data frame in a transmission timeslot allocated to the second sending node; or when the quantity of second sending nodes indicated in the transmission node list is greater than the quantity of transmission timeslots, that is, when the manner in Table 4 is used, only a second sending node arranged in a first position (or several front positions) in the list can send a second data frame in a transmission timeslot to the second receiving node.

It should be noted that, for a node that is neither in the access node list nor in the transmission node list, if the first field in the access node list indicates that a second sending node is allowed to send an access request to the second receiving node, the node randomly selects an access timeslot, and sends an access request in the access timeslot to the second receiving node; or if the first field indicates that a second sending node is not allowed to send an access request to the second receiving node, the node does not perform any operation, but waits for receiving next first indication information.

Optionally, in the first possible implementation, after the second sending node sends the access request and/or the second data frame to the second receiving node, second indication information obtained by the second sending node from the second receiving node may include the following two formats.

In a first format, the second indication information indicates a status of each access timeslot (m access timeslots in total) and a status of each transmission timeslot (n transmission timeslots in total). In a possible implementation, the format of the second indication information may be shown in Table 5.

**Table 5**

| Field | Value | Meaning |
|---|---|---|
| Status of an access timeslot 1 | A value "01" indicates that a collision occurs in the access timeslot 1; | Indicates a status of a first access timeslot on the access channel. |
| | a value "00" indicates that the access timeslot 1 is idle; and | |
| | a value "10" indicates that an access request sent in the access timeslot 1 is successfully received by the second receiving node. | |
| Status of an access timeslot 2 | A value "01" indicates that a collision occurs in the access timeslot 2; | Indicates a status of a second access timeslot on the access channel. |
| | a value "00" indicates that the access timeslot 2 is idle; and | |
| | a value "10" indicates that an access request sent in the access timeslot 2 is successfully received by the second receiving node. | |
| ... | ... | ... |
| Status of an access timeslot m | A value "01" indicates that a collision occurs in the access timeslot m; | Indicates a status of a last access timeslot on the access channel. |
| | a value "00" indicates that the access timeslot m is idle; and | |
| | a value "10" indicates that an access request sent in the access timeslot m is successfully received by the second receiving node. | |
| Status of a transmission timeslot 1 | A value "1" indicates that a second data frame sent in the transmission timeslot 1 is successfully received by the second receiving node; and | Indicates a status of a second data frame sent in a first transmission timeslot on the transmission channel and received by the second receiving node. |
| | a value "0" indicates that a second data frame sent in the transmission timeslot 1 is not successfully received by the second receiving node; | |
| | or | |
| | a value "0" indicates that a second data frame sent in the transmission timeslot 1 is successfully received by the second receiving node; and | |
| | a value "1" indicates that a second data frame sent in the transmission timeslot 1 is not successfully received by the second receiving node. | |
| Status of a transmission timeslot 2 | A value "1" indicates that a second data frame sent in the transmission timeslot 2 is successfully received by the second receiving node; and | Indicates a status of a second data frame sent in a first transmission timeslot on the transmission channel and received by the second receiving node. |
| | a value "0" indicates that a second data frame sent in the transmission timeslot 2 is not successfully received by the second receiving node; | |
| | or | |
| | a value "0" indicates that a second data frame sent in the transmission timeslot 2 is successfully received by the second receiving node; and | |
| | a value "1" indicates that a second data frame sent in the transmission timeslot 2 is not successfully received by the second receiving node. | |
| ... | ... | ... |
| Status of a transmission timeslot n | A value "1" indicates that a second data frame sent in the transmission timeslot n is successfully received by the second receiving node; and | Indicates a status of a second data frame sent in a last transmission timeslot on the transmission channel and received by the second receiving node. |
| | a value "0" indicates that a second data frame sent in the transmission timeslot n is not successfully received by the second receiving node; | |
| | or | |
| | a value "0" indicates that a second data frame sent in the transmission timeslot n is successfully received by the second receiving node; and | |
| | a value "1" indicates that a second data frame sent in the transmission timeslot n is not successfully received by the second receiving node. | |

It should be noted that, when a status of an access timeslot is indicated, two bits have four states in total, for example, "00", "01", "10", and "11". Any three of the four states may be used to indicate three states of the access timeslot: "collision", "idle", and "success". Specifically, which combination is selected to indicate which state is not limited in this application. Certainly, three states of the access timeslot may be further indicated in other manners.

In a second format, the second indication information indicates a status of each access timeslot (m access timeslots in total) and an updated transmission node list. The status and value of the access timeslot are similar to those in Table 5, and are not described again herein. The status and value in the updated transmission node list are similar to those in Table 2, Table 3, or Table 4, and are not described again herein.

In addition, a possible implementation method of updating the transmission node list by the second receiving node is:
if an access request sent by a second sending node is successfully received by the second receiving node, the second receiving node is added to the transmission node list; if a second data frame sent by a second sending node is successfully received by the second receiving node, and the second data frame does not indicate that the second sending node has more second data frames to be sent, the second sending node is deleted from the transmission node list; or if a second data frame sent by a second sending node is successfully received by the second receiving node, and the second data frame indicates that the second sending node has more second data frames to be sent, the second sending node is processed according to a preset rule. Specifically, the preset rule may be: rule 1: the second receiving node directly deletes the second sending node from the transmission node list after waiting until the second sending node does not indicate that it has more second data frames to be sent; or rule 2: after the second receiving node continuously receives N (N is an integer greater than or equal to 1) second data frames sent by the second sending node, although the second data frame indicates that the second sending node has more second data frames to be sent, the second receiving node moves the second sending node from the queue head of the transmission node list to another position.

Optionally, if a first receiving node also has a data frame to be sent to the second receiving node, the first receiving node indicates the information in an acknowledgement frame returned to the second receiving node, without specially sending an access request on the access channel to the second receiving node. This can reduce a quantity of nodes that need to send access requests in the network, reduce an access request collision probability, and further increase the network throughput.

Optionally, if the second sending node subsequently has more second data frames to be sent to the second receiving node, the second sending node indicates the information in the second data frame sent this time, without specially sending an access request on the access channel to the second sending node. This can reduce a quantity of nodes that need to send access requests in the network, reduce an access request collision probability, and further increase the network throughput.

In conclusion, in comparison with a CSMA/CA-based manner in the prior art, the full duplex transmission method provided by this embodiment of this application improves system stability, increases the system throughput, and reduces an access delay of the second sending node. In addition, the second receiving node may flexibly adjust and configure settings of the second transmission channel based on utilization of the access channel and the transmission channel by the second sending node. This greatly improves system flexibility, and further increases the system throughput.
(2) In a second possible implementation, an access node list indicates information about a second sending node that is allowed to send an access request to the second receiving node; and when channel configuration information indicates that a channel includes at least one access timeslot, that a second sending node sends an access request to a second receiving node based on first indication information includes: an i^{th} second sending node sends an access request in an i^{th} access timeslot to the second receiving node, where i is less than or equal to m, m is a total quantity of access timeslots, and i and m are both positive integers.

In this implementation, the second sending node has two different states, specifically: (1) an access state, which means that the second sending node has not sent an access request to the second receiving node yet, and waits for sending an access request to the second receiving node; and (2) a transmission state, which means that the second sending node has successfully sent an access request to the second receiving node, and waits for the second receiving node to allocate a transmission timeslot for sending data.

The second sending node in the access state determines, based on the access node list in the first indication information, whether the second sending node itself can send an access request in an access timeslot to the second receiving node. Only the second sending node in the access node list can send an access request in an access timeslot specified by the second receiving node to the second receiving node. Which nodes are added by the second receiving node to the access node list depends on a polling policy used by the second receiving node. For example, the second receiving node may add all nodes (except the second receiving node) in a network to the access node list. Alternatively, the second receiving node may add, based on topology information mastered by the second receiving node, only a one-hop neighboring node of the second receiving node to the access node list. Alternatively, if the second receiving node learns, by using other management information, which nodes have data to be sent to the second receiving node, the second receiving node adds the nodes having transmission requirements to the node list.

The second sending node in the transmission state has sent an access request and the sending is successful, and therefore it enters a transmission node list. The second receiving node allocates a transmission timeslot to this type of second sending node for sending a second data frame. In the transmission node list, if the second sending node is arranged at a queue head or front positions in the transmission node list, the second sending node may send a second data frame in the current transmission timeslot; or if the second sending node is arranged at an end of the transmission node list, the second sending node sends a second data frame to the second receiving node only after waiting for being arranged at a queue head of the transmission node list.

Specifically, in this implementation, the second sending node in the access node list sends, to the second receiving node, an access request in an access timeslot allocated to the second sending node. For example, a first one of second sending nodes sends an access request in a first access timeslot to the second receiving node, and a second one of second sending nodes sends an access request in a second access timeslot to the second receiving node. In addition, if the second sending node has no second data frame to be sent to the second receiving node, the second sending node does not perform any operation; or the second sending node may send an access request to the second receiving node, but the access request indicates that the second sending node has no second data frame to be sent to the second receiving node.

Assuming that there are m access timeslots on an access channel in total, an optional implementation solution of the access node list is shown in Table 6.

**Table 6**

| Field | Value | Meaning |
|---|---|---|
| Second sending node 1 | Node identifier of a second sending node | Indicates a node identifier of a second sending node that sends an access request in a first access timeslot on the access channel. |
| Second sending node 2 | Node identifier of a second sending node | Indicates a node identifier of a second sending node that sends an access request in a second access timeslot on the access channel. |
| ... | ... | ... |
| Second sending node m | Node identifier of a second sending node | Indicates a node identifier of a second sending node that sends an access request in a last access timeslot on the access channel. |

The node identifier of the second sending node may be a short address, or may be a long address.

In addition, a specific manner of sending a second data frame by the second sending node in the second implementation is similar to a specific manner of sending a second data frame by the second sending node in the first implementation, and is not described again herein.

Optionally, in the second implementation, after the second sending node sends the access request and/or the second data frame to the second receiving node, second indication information obtained by the second sending node from the second receiving node may include the following two formats.

In a first format, the second indication information indicates a status of each access timeslot (m access timeslots in total) and a status of each transmission timeslot (n transmission timeslots in total). Optionally, the format of the second indication information may be shown in Table 7.

**Table 7**

| Field | Value | Meaning |
|---|---|---|
| Status of an access timeslot 1 | A value "0" indicates that the access timeslot 1 is idle; and | Indicates a status of a first access timeslot on the access channel |
| | a value "1" indicates that an access request sent in the access timeslot 1 is successfully received by the second receiving node; | |
| | or | |
| | a value "1" indicates that the access timeslot 1 is idle; and | |
| | a value "0" indicates that an access request sent in the access timeslot 1 is successfully received by the second receiving node. | |
| Status of an access timeslot 2 | A value "0" indicates that the access timeslot 2 is idle; and | Indicates a status of a second access timeslot on the access channel |
| | a value "1" indicates that an access request sent in the access timeslot 2 is successfully received by the second receiving node; | |
| | or | |
| | a value "1" indicates that the access timeslot 2 is idle; and | |
| | a value "0" indicates that an access request sent in the access timeslot 2 is successfully received by the second receiving node; | |
| ... | ... | ... |
| Status of an access timeslot m | A value "0" indicates that the access timeslot m is idle; and | Indicates a status of a last access timeslot on the access channel |
| | a value "1" indicates that an access request sent in the access timeslot m is successfully received by the second receiving node; | |
| | or | |
| | a value "1" indicates that the access timeslot m is idle; and | |
| | a value "0" indicates that an access request sent in the access timeslot m is successfully received by the second receiving node. | |
| Status of a transmission timeslot 1 | A value "1" indicates that a second data frame sent in the transmission timeslot 1 is successfully received by the second receiving node; and | Indicates a status of a second data frame sent in a first transmission timeslot on a transmission channel and received by the second receiving node. |
| | a value "0" indicates that a second data frame sent in the transmission timeslot 1 is not successfully received by the second receiving node; | |
| | or | |
| | a value "0" indicates that a second data frame sent in the transmission timeslot 1 is successfully received by the second receiving node; and | |
| | a value "1" indicates that a second data frame sent in the transmission timeslot 1 is not successfully received by the second receiving node. | |
| Status of a transmission timeslot 2 | A value "1" indicates that a second data frame sent in the transmission timeslot 2 is successfully received by the second receiving node; and | Indicates a status of a second data frame sent in a first transmission timeslot on the transmission channel and received by the second receiving node. |
| | a value "0" indicates that a second data frame sent in the transmission timeslot 2 is not successfully received by the second receiving node; | |
| | or | |
| | a value "0" indicates that a second data frame sent in the transmission timeslot 2 is successfully received by the second receiving node; and | |
| | a value "1" indicates that a second data frame sent in the transmission timeslot 2 is not successfully received by the second receiving node. | |
| ... | ... | ... |
| Status of a transmission timeslot n | A value "1" indicates that a second data frame sent in the transmission timeslot n is successfully received by the second receiving node; and | Indicates a status of a second data frame sent in a last transmission timeslot on the transmission channel and received by the second receiving node. |
| | a value "0" indicates that a second data frame sent in the transmission timeslot n is not successfully received by the second receiving node; | |
| | or | |
| | a value "0" indicates that a second data frame sent in the transmission timeslot n is successfully received by the second receiving node; and | |
| | a value "1" indicates that a second data frame sent in the transmission timeslot n is not successfully received by the second receiving node. | |

In a second format, the second indication information indicates a status of each access timeslot (m access timeslots in total) and an updated transmission node list. The status and value of the access timeslot are similar to those in Table 7, and are not described again herein. The status and value in the updated transmission node list are similar to those in Table 2, Table 3, or Table 4, and are not described again herein.

Optionally, if the second sending node subsequently has more second data frames to be sent to the second receiving node, the second sending node indicates the information in the second data frame sent this time, without specially sending an access request on the access channel to the second sending node. This can reduce a quantity of nodes that need to send access requests in the network, and further increase the network throughput.

In addition, an implementation method of updating the transmission node list by the second receiving node is similar to the implementation method of updating the transmission node list by the second receiving node in the first possible implementation, and is not described again herein.

(3) In a third possible implementation, no access channel is defined in a full duplex transmission opportunity 2 but only a transmission channel is included. In this case, the first indication information includes neither an access channel nor an access timeslot. In this case, a transmission node list indicates information about a second sending node that is allowed to send a second data frame to the second receiving node. When channel configuration information indicates that a channel includes at least one transmission timeslot, that a second sending node sends a second data frame to a second receiving node based on first indication information includes: if the second sending node has a second data frame to be sent to the second receiving node, the second sending node sends the second data frame to the second receiving node after the transmission timeslot starts.

Specifically, if the second sending node in the transmission node list has a second data frame to be sent to the second receiving node, the second sending node sends the second data frame to the second receiving node after the transmission timeslot allocated to the second sending node starts. For example, based on a format of the transmission node list, a second sending node 1 may send a second data frame on the transmission channel first, and a second sending node 2 may send a second data frame on the transmission channel second. If a second sending node has no second data frame to be sent to the second receiving node, the second sending node does not perform any operation. If a current transmission timeslot is not a transmission timeslot allocated to a second sending node, when the transmission timeslot starts, the second sending node needs to listen to a frame header of a second data frame sent by another second sending node to the second receiving node, and determine an end time of the current transmission timeslot and a start time of a next transmission timeslot based on a "frame duration" field in the frame header of the second data frame, to determine a transmission timeslot for the second sending node.

Assuming that a transmission channel in a second transmission opportunity is shared by m second sending nodes, an optional implementation solution of the transmission node list is shown in Table 8.

**Table 8**

| Field | Value | Meaning |
|---|---|---|
| Second sending node 1 | Node identifier of a second sending node | Indicates a node identifier of a second sending node that may perform sending on the transmission channel first. |
| Second sending node 2 | Node identifier of a second sending node | Indicates a node identifier of a second sending node that may perform sending on the transmission channel second. |
| ... | ... | ... |
| Second sending node m | Node identifier of a second sending node | Indicates a node identifier of a second sending node that may perform sending on the transmission channel m^{th}. |

The node identifier of the second sending node may be a short address, or may be a long address.

In addition, a node not in the transmission node list does not perform any operation, but waits for receiving next first indication information.

Optionally, in the third possible implementation, after the second sending node sends the access request and/or the second data frame to the second receiving node, second indication information obtained by the second sending node from the second receiving node is used to indicate a receiving status of a second data frame received by the second receiving node in each transmission timeslot. In this case, because the second indication information is a feedback about the receiving status of the second data frame sent by the second sending node, the second indication information may be in a format same as that of an acknowledgement frame sent by a first receiving node to a first sending node. Optionally, the format of the second indication information may be shown in Table 9.

**Table 9**

| Field | Value | Meaning |
|---|---|---|
| Status of a transmission timeslot 1 | A value "1" indicates that a second data frame sent in the transmission timeslot 1 is successfully received by the second receiving node; and | Indicates a status of a second data frame sent in a first transmission timeslot on the transmission channel and received by the second receiving node. |
| | a value "0" indicates that a second data frame sent in the transmission timeslot 1 is not successfully received by the second receiving node; | |
| | or | |
| | a value "0" indicates that a second data frame sent in the transmission timeslot 1 is successfully received by the second receiving node; and | |
| | a value "1" indicates that a second data frame sent in the transmission timeslot 1 is not successfully received by the second receiving node. | |
| Status of a transmission timeslot 2 | A value "1" indicates that a second data frame sent in the transmission timeslot 2 is successfully received by the second receiving node; and | Indicates a status of a second data frame sent in a first transmission timeslot on the transmission channel and received by the second receiving node. |
| | a value "0" indicates that a second data frame sent in the transmission timeslot 2 is not successfully received by the second receiving node; | |
| | or | |
| | a value "0" indicates that a second data frame sent in the transmission timeslot 2 is successfully received by the second receiving node; and | |
| | a value "1" indicates that a second data frame sent in the transmission timeslot 2 is not successfully received by the second receiving node. | |
| ... | ... | ... |
| Status of a transmission timeslot n | A value "1" indicates that a second data frame sent in the transmission timeslot n is successfully received by the second receiving node; and | Indicates a status of a second data frame sent in a last transmission timeslot on the transmission channel and received by the second receiving node. |
| | a value "0" indicates that a second data frame sent in the transmission timeslot n is not successfully received by the second receiving node; | |
| | or | |
| | a value "0" indicates that a second data frame sent in the transmission timeslot n is successfully received by the second receiving node; and | |
| | a value "1" indicates that a second data frame sent in the transmission timeslot n is not successfully received by the second receiving node. | |

According to the full duplex transmission method provided by this embodiment of this application, in different application scenarios, the second sending node sends an access request and/or a second data frame to the second receiving node in different manners, thereby improving flexibility of full duplex transmission.

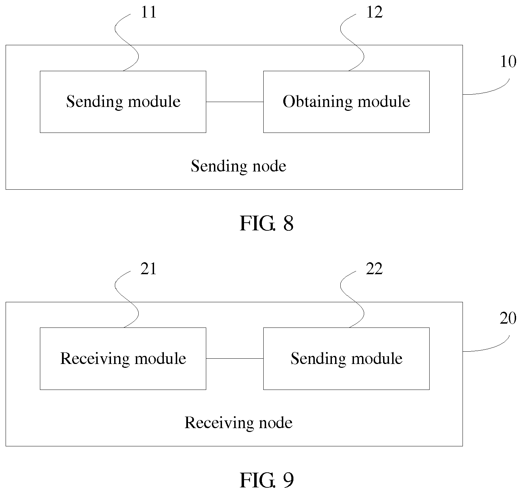

FIG. 8 is a schematic structural diagram of a sending node according to Embodiment 1 of this application. As shown in FIG. 8, the sending node is a second sending node, and the sending node 10 includes:
a sending module 11, configured to send an access request and/or a second data frame to a second receiving node based on first indication information when a first sending node sends a first data frame to a first receiving node, where the first sending node and the second receiving node are the same node, and the first indication information includes at least one of an access node list or a transmission node list; and
an obtaining module 12, configured to obtain second indication information from the second receiving node, where the second indication information includes information used to indicate whether the access request and/or the second data frame are/is sent successfully.

Optionally, the sending module 11 may be a transmitter or a transmitter circuit in the sending node, and the obtaining module 12 may be a receiver or a receiver circuit in the sending node, or the sending module 11 and the obtaining module 12 may further integrate some functions of a processor.

The sending node provided in this embodiment may be configured to perform the technical solution on the sending node side in any one of the foregoing method embodiments. An implementation principle and a technical effect of this embodiment are similar to those of the method embodiment. Details are not described herein again.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the obtaining module 12 is specifically configured to:
when the first receiving node sends an acknowledgement frame to the first sending node, receive the second indication information sent by the second receiving node; or
when the first sending node sends a first data frame to the first receiving node next time, obtain the second indication information from the second receiving node, where the second indication information is carried in the first data frame.

Optionally, the obtaining module 12 is further configured to:
obtain the first indication information from the second receiving node, where the first indication information is carried in the first data frame; or
obtain the first indication information from the second receiving node, where the first indication information is carried in previous second indication information, and the previous second indication information is second indication information sent by the second receiving node to the second sending node when the first receiving node sends an acknowledgement frame to the first sending node previous time.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the sending module 11 is specifically configured to:
if the access node list includes a first field, and the first field indicates that the second sending node is allowed to send the access request, randomly select an access timeslot, and send the access request in the access timeslot to the second receiving node; or
if the access node list includes the first field and a second field, where the second field is used to indicate a collision queue, and the collision queue is used to indicate a sequence of resending access requests by second sending nodes that have sent the access requests but the sent access requests collide, randomly select, by the second sending node arranged at a queue head of the collision queue, an access timeslot, and send the access request in the access timeslot to the second receiving node.

Optionally, the channel configuration information indicates that the channel includes at least one access timeslot, and the access node list indicates information about a second sending node that is allowed to send an access request to the second receiving node; and
the sending module 11 is specifically configured to:
send, by an i^{th} second sending node, the access request in an i^{th} access timeslot to the second receiving node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the sending module 11 is specifically configured to:
send, by the second sending node in the transmission node list, the second data frame in the transmission timeslot to the second receiving node.

Optionally, the channel configuration information indicates that the channel includes at least one transmission timeslot, and the transmission node list indicates information about a second sending node that is allowed to send the second data frame to the second receiving node; and
the sending module 11 is specifically configured to:
if the second sending node has a second data frame to be sent to the second receiving node, send, by the second sending node, the second data frame to the second receiving node after the transmission timeslot starts.

Optionally, the first data frame includes a third field, and the third field is used to indicate whether the first data frame carries the first indication information.

The sending node provided in this embodiment may be configured to perform the technical solution on the sending node side in any one of the foregoing method embodiments. An implementation principle and a technical effect of this embodiment are similar to those of the method embodiment. Details are not described herein again.

FIG. 9 is a schematic structural diagram of a receiving node according to Embodiment 1 of this application. As shown in FIG. 9, the receiving node is a second receiving node, and the receiving node 20 includes:
a receiving module 21, configured to: when a first sending node sends a first data frame to a first receiving node, receive an access request and/or a second data frame sent by a second sending node based on first indication information, where the first indication information includes at least one of an access node list or a transmission node list, and the first sending node and the second receiving node are the same node; and
a sending module 22, configured to send second indication information to the second sending node, where the second indication information includes information used to indicate whether the access request and/or the second data frame are/is sent successfully.

Optionally, the receiving module 21 may be a receiver or a receiver circuit in the receiving node, and the sending module 22 may be a transmitter or a transmitter circuit in the receiving node, or the receiving module 21 and the sending module 22 may further integrate some functions of a processor.

The receiving node provided in this embodiment may be configured to perform the technical solution on the receiving node side in any one of the foregoing method embodiments. An implementation principle and a technical effect of this embodiment are similar to those of the method embodiment. Details are not described herein again.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the sending module 22 is specifically configured to:
when the first receiving node sends an acknowledgement frame to the first sending node, send the second indication information to the second sending node; or
when the first sending node sends a first data frame to the first receiving node next time, send the second indication information to the second sending node, where the second indication information is carried in the first data frame.

Optionally, the sending module 22 is further configured to:
send the first indication information to the second sending node, where the first indication information is carried in the first data frame sent by the first sending node to the first receiving node; or
when the first receiving node sends an acknowledgement frame to the first sending node previous time, send second indication information to the second sending node, where the second indication information carries the first indication information.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the receiving module 21 is specifically configured to:
if the access node list includes a first field, and the first field indicates that the second sending node is allowed to send the access request, receive, in an access timeslot, the access request sent by the second sending node, where the access timeslot is an access timeslot randomly selected by the second sending node; or
if the access node list includes the first field and a second field, where the second field is used to indicate a collision queue, and the collision queue is used to indicate a sequence of resending access requests by second sending nodes that have sent the access requests but the sent access requests collide, receive, in an access timeslot, the access request sent by the second sending node, where the access timeslot is an access timeslot randomly selected by the second sending node arranged at a queue head of the collision queue.

Optionally, the channel configuration information indicates that the channel includes at least one access timeslot, and the access node list indicates information about a second sending node that is allowed to send an access request to the second receiving node; and
the receiving module 21 is specifically configured to:
receive, in an i^{th} access timeslot, the access request sent by an i^{th} second sending node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the receiving module 21 is specifically configured to:
receive the second data frame sent in the transmission timeslot by the second sending node in the transmission node list.

Optionally, the channel configuration information indicates that the channel includes at least one transmission timeslot, and the transmission node list indicates information about a second sending node that is allowed to send the second data frame to the first sending node; and
the receiving module 21 is specifically configured to:
if the second sending node has a second data frame to be sent to the second receiving node, receive the second data frame sent by the second sending node after the transmission timeslot starts.

Optionally, the first data frame includes a third field, and the third field is used to indicate whether the first data frame carries the first indication information.

The receiving node provided in this embodiment may be configured to perform the technical solution on the receiving node side in any one of the foregoing method embodiments. An implementation principle and a technical effect of this embodiment are similar to those of the method embodiment. Details are not described herein again.

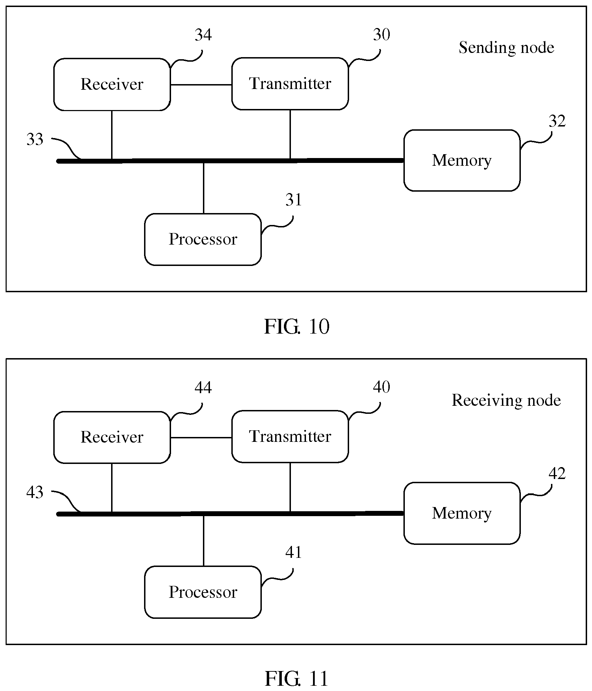

FIG. 10 is a schematic structural diagram of a sending node according to Embodiment 2 of this application. As shown in FIG. 10, the sending node may include a transmitter 30, a processor 31, a memory 32, a receiver 34, and at least one communications bus 33. The communications bus 33 is configured to implement communications connections between the components. The memory 32 may include a high-speed RAM memory, or may further include a non-volatile memory NVM, for example, at least one disk storage. The memory 32 may store various programs, used to complete various processing functions and implement steps of the method in this embodiment. The receiver 34 in this embodiment may be a corresponding input interface having a communication function and an information receiving function, or may be a radio frequency module or a baseband module in the sending node. The transmitter 30 in this embodiment may be a corresponding output interface having a communication function and an information sending function, or may be a radio frequency module or a baseband module in the sending node. Optionally, the transmitter 30 and the receiver 34 may be integrated in one communications interface, or may be two separate communications interfaces.

In this embodiment, the transmitter 30 is configured to send, by a second sending node, an access request and/or a second data frame to a second receiving node based on first indication information when a first sending node sends a first data frame to a first receiving node, where the first sending node and the second receiving node are the same node, and the first indication information includes at least one of an access node list or a transmission node list; and
the receiver 34 is configured to obtain second indication information from the second receiving node, where the second indication information includes information used to indicate whether the access request and/or the second data frame are/is sent successfully.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the receiver 34 is specifically configured to:
when the first receiving node sends an acknowledgement frame to the first sending node, receive the second indication information sent by the second receiving node; or
when the first sending node sends a first data frame to the first receiving node next time, obtain the second indication information from the second receiving node, where the second indication information is carried in the first data frame.

Optionally, the processor 31 is configured to:
obtain the first indication information from the second receiving node, where the first indication information is carried in the first data frame; or
obtain the first indication information from the second receiving node, where the first indication information is carried in previous second indication information, and the previous second indication information is second indication information sent by the second receiving node to the second sending node when the first receiving node sends an acknowledgement frame to the first sending node previous time.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the transmitter 30 is specifically configured to:
if the access node list includes a first field, and the first field indicates that the second sending node is allowed to send the access request, randomly select an access timeslot, and send the access request in the access timeslot to the second receiving node; or
if the access node list includes the first field and a second field, where the second field is used to indicate a collision queue, and the collision queue is used to indicate a sequence of resending access requests by second sending nodes that have sent the access requests but the sent access requests collide, randomly select, by the second sending node arranged at a queue head of the collision queue, an access timeslot, and send the access request in the access timeslot to the second receiving node.

Optionally, the channel configuration information indicates that the channel includes at least one access timeslot, and the access node list indicates information about a second sending node that is allowed to send an access request to the second receiving node; and
the transmitter 30 is specifically configured to:
send, by an i^{th} second sending node, the access request in an i^{th} access timeslot to the second receiving node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the transmitter 30 is specifically configured to:
send, by the second sending node in the transmission node list, the second data frame in the transmission timeslot to the second receiving node.

Optionally, the channel configuration information indicates that the channel includes at least one transmission timeslot, and the transmission node list indicates information about a second sending node that is allowed to send the second data frame to the second receiving node; and
the transmitter 30 is specifically configured to:
if the second sending node has a second data frame to be sent to the second receiving node, send the second data frame to the second receiving node after the transmission timeslot starts.

Optionally, the first data frame includes a third field, and the third field is used to indicate whether the first data frame carries the first indication information.

The sending node provided in this embodiment may be configured to perform the technical solution on the sending node side in any one of the foregoing method embodiments. An implementation principle and a technical effect of this embodiment are similar to those of the method embodiment. Details are not described herein again.

FIG. 11 is a schematic structural diagram of a receiving node according to Embodiment 2 of this application. As shown in FIG. 11, the receiving node may include a transmitter 40, a processor 41, a memory 42, a receiver 44, and at least one communications bus 43. The communications bus 43 is configured to implement communications connections between the components. The memory 42 may include a high-speed RAM memory, or may further include a non-volatile memory NVM, for example, at least one disk storage. The memory 42 may store various programs, used to complete various processing functions and implement steps of the method in this embodiment. The receiver 44 in this embodiment may be a corresponding input interface having a communication function and an information receiving function, or may be a radio frequency module or a baseband module in the receiving node. The transmitter 40 in this embodiment may be a corresponding output interface having a communication function and an information sending function, or may be a radio frequency module or a baseband module in the receiving node. Optionally, the transmitter 40 and the receiver 44 may be integrated in one communications interface, or may be two separate communications interfaces.

In this embodiment, the receiver 44 is configured to: when a first sending node sends a first data frame to a first receiving node, receive an access request and/or a second data frame sent by a second sending node based on first indication information, where the first indication information includes at least one of an access node list or a transmission node list, and the first sending node and the second receiving node are the same node; and
the transmitter 40 is configured to send second indication information to the second sending node, where the second indication information includes information used to indicate whether the access request and/or the second data frame are/is sent successfully.

Optionally, the first indication information further includes a transmission end time, the transmission end time is used to indicate a latest end time of sending the access request and/or the second data frame by the second sending node to the second receiving node, and the transmission end time is not later than an end time of sending the first data frame by the first sending node to the first receiving node.

Optionally, the transmitter 40 is specifically configured to:
when the first receiving node sends an acknowledgement frame to the first sending node, send the second indication information to the second sending node; or
when the first sending node sends a first data frame to the first receiving node next time, send the second indication information to the second sending node, where the second indication information is carried in the first data frame.

Optionally, the transmitter 40 is specifically configured to:
send the first indication information to the second sending node, where the first indication information is carried in the first data frame sent by the first sending node to the first receiving node; or
when the first receiving node sends an acknowledgement frame to the first sending node previous time, send second indication information to the second sending node, where the second indication information carries the first indication information.

Optionally, the first indication information further includes channel configuration information, and the channel configuration information is used to indicate at least one of the following information:
whether a channel includes an access channel and/or includes a transmission channel, where the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel includes the access channel; and
a quantity of transmission timeslots on the transmission channel if the channel includes the transmission channel.

Optionally, the channel configuration information indicates that the channel includes at least one access timeslot; and
the receiver 44 is specifically configured to:
if the access node list includes a first field, and the first field indicates that the second sending node is allowed to send the access request, receive, in an access timeslot, the access request sent by the second sending node, where the access timeslot is an access timeslot randomly selected by the second sending node; or
if the access node list includes the first field and a second field, where the second field is used to indicate a collision queue, and the collision queue is used to indicate a sequence of resending access requests by second sending nodes that have sent the access requests but the sent access requests collide, receive, in an access timeslot, the access request sent by the second sending node, where the access timeslot is an access timeslot randomly selected by the second sending node arranged at a queue head of the collision queue.

Optionally, the channel configuration information indicates that the channel includes at least one access timeslot, and the access node list indicates information about a second sending node that is allowed to send an access request to the second receiving node; and
the receiver 44 is specifically configured to:
receive, in an i^{th} access timeslot, the access request sent by an i^{th} second sending node, where i is less than or equal to m, m is a total quantity of access timeslots, and i and m are both positive integers.

Optionally, the channel configuration information indicates that the channel includes at least one transmission timeslot, and the transmission node list indicates information about a second sending node that is allowed to send the second data frame to the second receiving node; and
the receiver 44 is specifically configured to:
receive the second data frame sent in the transmission timeslot by the second sending node in the transmission node list.

Optionally, the channel configuration information indicates that the channel includes at least one transmission timeslot, and the transmission node list indicates information about a second sending node that is allowed to send the second data frame to the first sending node; and
the receiver 44 is specifically configured to:
if the second sending node has a second data frame to be sent to the second receiving node, receive the second data frame sent by the second sending node after the transmission timeslot starts.

Optionally, the first data frame includes a third field, and the third field is used to indicate whether the first data frame carries the first indication information.

The receiving node provided in this embodiment is configured to perform the technical solution on the receiving node side in any one of the foregoing method embodiments. An implementation principle and a technical effect of this embodiment are similar to those of the method embodiment. Details are not described herein again.

This application further provides a readable storage medium, where the readable storage medium stores an instruction; and when at least one processor of a sending node executes the instruction, the sending node performs the full duplex transmission method provided by any one of the foregoing method embodiments.

This application further provides a readable storage medium, where the readable storage medium stores an instruction; and when at least one processor of a receiving node executes the instruction, the receiving node performs the full duplex transmission method provided by any one of the foregoing method embodiments.

This application further provides a program product. The program product includes an instruction, and the instruction is stored in a readable storage medium. At least one processor of a sending node may read the instruction from the readable storage medium, and execute the instruction so that the sending node implements the full duplex transmission method provided by any one of the method embodiments.

This application further provides a program product. The program product includes an instruction, and the instruction is stored in a readable storage medium. At least one processor of the receiving node may read the instruction from the readable storage medium, and execute the instruction so that the receiving node implements the full duplex transmission method provided by any one of the foregoing method embodiments.

In the specific implementation of the sending node or the receiving node, it should be understood that the processor may be a central processing unit (English: Central Processing Unit, CPU for short), or may be another general-purpose processor, a digital signal processor (English: Digital Signal Processor, DSP for short), an application-specific integrated circuit (English: Application-Specific Integrated Circuit, ASIC for short), or the like. The general purpose processor may be a microprocessor, or the processor may be any conventional processor or the like. The steps of the methods disclosed with reference to this application may be directly implemented by a hardware processor, or may be implemented by a combination of hardware and a software module in a processor.

All or some of the steps in the foregoing method embodiments may be implemented by a program instructing related hardware. The foregoing program may be stored in a computer-readable memory. When the program is executed, the steps of the methods in the embodiments are performed. The memory (storage medium) includes a read-only memory (English: read-only memory, ROM for short), a RAM, a flash memory, a hard disk, a solid state disk, a magnetic tape (English: magnetic tape), a floppy disk (English: floppy disk), an optical disc (English: optical disc), and any combination thereof.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A full duplex transmission method, comprising:
when a first sending node sends a first data frame to a first receiving node, sending, by a second sending node, an access request and/or a second data frame to a second receiving node based on first indication information, wherein the first sending node and the second receiving node are the same node, and the first indication information comprises at least one of an access node list or a transmission node list; and
obtaining, by the second sending node, second indication information from the second receiving node, wherein the second indication information comprises information used to indicate whether the access request and/or the second data frame are/is sent successfully.

2. The method according to claim 1, wherein the first indication information further comprises a transmission end time, the transmission end time is used to indicate a latest end time of sending the access request and/or the second data frame by the second sending node to the second receiving node, and the transmission end time is not later than an end time of sending the first data frame by the first sending node to the first receiving node.

3. The method according to claim 1 or 2, wherein the obtaining, by the second sending node, second indication information from the second receiving node comprises:
when the first receiving node sends an acknowledgement frame to the first sending node, receiving, by the second sending node, the second indication information sent by the second receiving node; or
when the first sending node sends a first data frame to the first receiving node next time, obtaining, by the second sending node, the second indication information from the second receiving node, wherein the second indication information is carried in the first data frame.

4. The method according to any one of claims 1 to 3, wherein before the sending, by a second sending node, an access request and/or a second data frame to a second receiving node based on first indication information, the method further comprises:
obtaining, by the second sending node, the first indication information from the second receiving node, wherein the first indication information is carried in the first data frame; or
obtaining, by the second sending node, the first indication information from the second receiving node, wherein the first indication information is carried in previous second indication information, and the previous second indication information is second indication information sent by the second receiving node to the second sending node when the first receiving node sends an acknowledgement frame to the first sending node previous time.

5. The method according to any one of claims 1 to 4, wherein the first indication information further comprises channel configuration information, and the channel configuration information is used to indicate at least one of the following information:
whether a channel comprises an access channel and/or comprises a transmission channel, wherein the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel comprises the access channel; and
a quantity of transmission timeslots on the transmission channel if the channel comprises the transmission channel.

6. The method according to claim 5, wherein the channel configuration information indicates that the channel comprises at least one access timeslot; and
the sending, by a second sending node, an access request to a second receiving node based on first indication information comprises:
if the access node list comprises a first field, and the first field indicates that the second sending node is allowed to send the access request, randomly selecting, by the second sending node, an access timeslot, and sending the access request in the access timeslot to the second receiving node; or
if the access node list comprises the first field and a second field, wherein the second field is used to indicate a collision queue, and the collision queue is used to indicate a sequence of resending access requests by second sending nodes that have sent the access requests but the sent access requests collide, randomly selecting, by the second sending node arranged at a queue head of the collision queue, an access timeslot, and sending the access request in the access timeslot to the second receiving node.

7. The method according to claim 5, wherein the channel configuration information indicates that the channel comprises at least one access timeslot, and the access node list indicates information about a second sending node that is allowed to send an access request to the second receiving node; and
the sending, by a second sending node, an access request to a second receiving node based on first indication information comprises:
sending, by an i^{th} second sending node, the access request in an i^{th} access timeslot to the second receiving node, wherein i is less than or equal to m, m is a total quantity of access timeslots, and i and m are both positive integers.

8. The method according to claim 6 or 7, wherein the channel configuration information indicates that the channel comprises at least one transmission timeslot, and the transmission node list indicates information about a second sending node that is allowed to send the second data frame to the second receiving node; and
the sending, by a second sending node, a second data frame to a second receiving node based on first indication information comprises:
sending, by the second sending node in the transmission node list, the second data frame in the transmission timeslot to the second receiving node.

9. The method according to claim 5, wherein the channel configuration information indicates that the channel comprises at least one transmission timeslot, and the transmission node list indicates information about a second sending node that is allowed to send the second data frame to the second receiving node; and
the sending, by a second sending node, a second data frame to a second receiving node based on first indication information comprises:
if the second sending node has a second data frame to be sent to the second receiving node, sending, by the second sending node, the second data frame to the second receiving node after the transmission timeslot starts.

10. The method according to any one of claims 1 to 9, wherein the first data frame comprises a third field, and the third field is used to indicate whether the first data frame carries the first indication information.

11. A full duplex transmission method, comprising:
when a first sending node sends a first data frame to a first receiving node, receiving, by a second receiving node, an access request and/or a second data frame sent by a second sending node based on first indication information, wherein the first indication information comprises at least one of an access node list or a transmission node list, and the first sending node and the second receiving node are the same node; and
sending, by the second receiving node, second indication information to the second sending node, wherein the second indication information comprises information used to indicate whether the access request and/or the second data frame are/is sent successfully.

12. The method according to claim 11, wherein the first indication information further comprises a transmission end time, the transmission end time is used to indicate a latest end time of sending the access request and/or the second data frame by the second sending node to the second receiving node, and the transmission end time is not later than an end time of sending the first data frame by the first sending node to the first receiving node.

13. The method according to claim 11 or 12, wherein the sending, by the second receiving node, second indication information to the second sending node comprises:
when the first receiving node sends an acknowledgement frame to the first sending node, sending, by the second receiving node, the second indication information to the second sending node; or
when the first sending node sends a first data frame to the first receiving node next time, sending, by the second receiving node, the second indication information to the second sending node, wherein the second indication information is carried in the first data frame.

14. The method according to any one of claims 11 to 13, wherein before the receiving, by a second receiving node, an access request and/or a second data frame sent by a second sending node based on first indication information, the method further comprises:
sending, by the second receiving node, the first indication information to the second sending node, wherein the first indication information is carried in the first data frame sent by the first sending node to the first receiving node; or
when the first receiving node sends an acknowledgement frame to the first sending node previous time, sending, by the second receiving node, second indication information to the second sending node, wherein the second indication information carries the first indication information.

15. The method according to any one of claims 11 to 14, wherein the first indication information further comprises channel configuration information, and the channel configuration information is used to indicate at least one of the following information:
whether a channel comprises an access channel and/or comprises a transmission channel, wherein the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel comprises the access channel; and
a quantity of transmission timeslots on the transmission channel if the channel comprises the transmission channel.

16. The method according to claim 15, wherein the channel configuration information indicates that the channel comprises at least one access timeslot; and
the receiving, by a second receiving node, an access request sent by a second sending node based on first indication information comprises:
if the access node list comprises a first field, and the first field indicates that the second sending node is allowed to send the access request, receiving, by the second receiving node in an access timeslot, the access request sent by the second sending node, wherein the access timeslot is an access timeslot randomly selected by the second sending node; or
if the access node list comprises the first field and a second field, wherein the second field is used to indicate a collision queue, and the collision queue is used to indicate a sequence of resending access requests by second sending nodes that have sent the access requests but the sent access requests collide, receiving, by the second receiving node in an access timeslot, the access request sent by the second sending node, wherein the access timeslot is an access timeslot randomly selected by the second sending node arranged at a queue head of the collision queue.

17. The method according to claim 15, wherein the channel configuration information indicates that the channel comprises at least one access timeslot, and the access node list indicates information about a second sending node that is allowed to send an access request to the second receiving node; and
the receiving, by a second receiving node, an access request sent by a second sending node based on first indication information comprises:
receiving, by the second receiving node in an i^{th} access timeslot, the access request sent by an i^{th} second sending node, wherein i is less than or equal to m, m is a total quantity of access timeslots, and i and m are both positive integers.

18. The method according to claim 16 or 17, wherein the channel configuration information indicates that the channel comprises at least one transmission timeslot, and the transmission node list indicates information about a second sending node that is allowed to send the second data frame to the second receiving node; and
the receiving, by a second receiving node, a second data frame sent by a second sending node based on first indication information comprises:
receiving, by the second receiving node, the second data frame sent in the transmission timeslot by the second sending node in the transmission node list.

19. The method according to claim 15, wherein the channel configuration information indicates that the channel comprises at least one transmission timeslot, and the transmission node list indicates information about a second sending node that is allowed to send the second data frame to the first sending node; and
the receiving, by a second receiving node, a second data frame sent by a second sending node based on first indication information comprises:
if the second sending node has a second data frame to be sent to the second receiving node, receiving, by the second receiving node, the second data frame sent by the second sending node after the transmission timeslot starts.

20. The method according to any one of claims 11 to 19, wherein the first data frame comprises a third field, and the third field is used to indicate whether the first data frame carries the first indication information.

21. A sending node, wherein the sending node is a second sending node, and the second sending node comprises:
a sending module, configured to send an access request and/or a second data frame to a second receiving node based on first indication information when a first sending node sends a first data frame to a first receiving node, wherein the first sending node and the second receiving node are the same node, and the first indication information comprises at least one of an access node list or a transmission node list; and
an obtaining module, configured to obtain second indication information from the second receiving node, wherein the second indication information comprises information used to indicate whether the access request and/or the second data frame are/is sent successfully.

22. The sending node according to claim 21, wherein the first indication information further comprises a transmission end time, the transmission end time is used to indicate a latest end time of sending the access request and/or the second data frame by the second sending node to the second receiving node, and the transmission end time is not later than an end time of sending the first data frame by the first sending node to the first receiving node.

23. The sending node according to claim 21 or 22, wherein the obtaining module is specifically configured to:
when the first receiving node sends an acknowledgement frame to the first sending node, receive the second indication information sent by the second receiving node; or
when the first sending node sends a first data frame to the first receiving node next time, obtain the second indication information from the second receiving node, wherein the second indication information is carried in the first data frame.

24. The sending node according to any one of claims 21 to 23, wherein the obtaining module is further configured to:
obtain the first indication information from the second receiving node, wherein the first indication information is carried in the first data frame; or
obtain the first indication information from the second receiving node, wherein the first indication information is carried in previous second indication information, and the previous second indication information is second indication information sent by the second receiving node to the second sending node when the first receiving node sends an acknowledgement frame to the first sending node previous time.

25. The sending node according to any one of claims 21 to 24, wherein the first indication information further comprises channel configuration information, and the channel configuration information is used to indicate at least one of the following information:
whether a channel comprises an access channel and/or comprises a transmission channel, wherein the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel comprises the access channel; and
a quantity of transmission timeslots on the transmission channel if the channel comprises the transmission channel.

26. The sending node according to claim 25, wherein the channel configuration information indicates that the channel comprises at least one access timeslot; and
the sending module is specifically configured to:
if the access node list comprises a first field, and the first field indicates that the second sending node is allowed to send the access request, randomly select an access timeslot, and send the access request in the access timeslot to the second receiving node; or
if the access node list comprises the first field and a second field, wherein the second field is used to indicate a collision queue, and the collision queue is used to indicate a sequence of resending access requests by second sending nodes that have sent the access requests but the sent access requests collide, randomly select, by the second sending node arranged at a queue head of the collision queue, an access timeslot, and send the access request in the access timeslot to the second receiving node.

27. The sending node according to claim 25, wherein the channel configuration information indicates that the channel comprises at least one access timeslot, and the access node list indicates information about a second sending node that is allowed to send an access request to the second receiving node; and
the sending module is specifically configured to:
send, by an i^{th} second sending node, the access request in an i^{th} access timeslot to the second receiving node, wherein i is less than or equal to m, m is a total quantity of access timeslots, and i and m are both positive integers.

28. The sending node according to claim 26 or 27, wherein the channel configuration information indicates that the channel comprises at least one transmission timeslot, and the transmission node list indicates information about a second sending node that is allowed to send the second data frame to the second receiving node; and
the sending module is specifically configured to:
send, by the second sending node in the transmission node list, the second data frame in the transmission timeslot to the second receiving node.

29. The sending node according to claim 25, wherein the channel configuration information indicates that the channel comprises at least one transmission timeslot, and the transmission node list indicates information about a second sending node that is allowed to send the second data frame to the second receiving node; and
the sending module is specifically configured to:
if the second sending node has a second data frame to be sent to the second receiving node, send, by the second sending node, the second data frame to the second receiving node after the transmission timeslot starts.

30. A receiving node, wherein the receiving node is a second receiving node, and the second receiving node comprises:
a receiving module, configured to: when a first sending node sends a first data frame to a first receiving node, receive an access request and/or a second data frame sent by a second sending node based on first indication information, wherein the first indication information comprises at least one of an access node list or a transmission node list, and the first sending node and the second receiving node are the same node; and
a sending module, configured to send second indication information to the second sending node, wherein the second indication information comprises information used to indicate whether the access request and/or the second data frame are/is sent successfully.

31. The receiving node according to claim 30, wherein the first indication information further comprises a transmission end time, the transmission end time is used to indicate a latest end time of sending the access request and/or the second data frame by the second sending node to the second receiving node, and the transmission end time is not later than an end time of sending the first data frame by the first sending node to the first receiving node.

32. The receiving node according to claim 30 or 31, wherein the sending module is specifically configured to:
when the first receiving node sends an acknowledgement frame to the first sending node, send the second indication information to the second sending node; or
when the first sending node sends a first data frame to the first receiving node next time, send the second indication information to the second sending node, wherein the second indication information is carried in the first data frame.

33. The receiving node according to any one of claims 30 to 32, wherein the sending module is further configured to:
send the first indication information to the second sending node, wherein the first indication information is carried in the first data frame sent by the first sending node to the first receiving node; or
when the first receiving node sends an acknowledgement frame to the first sending node previous time, send second indication information to the second sending node, wherein the second indication information carries the first indication information.

34. The receiving node according to any one of claims 30 to 33, wherein the first indication information further comprises channel configuration information, and the channel configuration information is used to indicate at least one of the following information:
whether a channel comprises an access channel and/or comprises a transmission channel, wherein the channel is a channel between the second sending node and the second receiving node, the access channel is a channel on which the second sending node sends the access request to the second receiving node, and the transmission channel is a channel on which the second sending node sends the second data frame to the second receiving node;
a quantity of access timeslots on the access channel if the channel comprises the access channel; and
a quantity of transmission timeslots on the transmission channel if the channel comprises the transmission channel.

35. The receiving node according to claim 34, wherein the channel configuration information indicates that the channel comprises at least one access timeslot; and
the receiving module is specifically configured to:
if the access node list comprises a first field, and the first field indicates that the second sending node is allowed to send the access request, receive, in an access timeslot, the access request sent by the second sending node, wherein the access timeslot is an access timeslot randomly selected by the second sending node; or
if the access node list comprises the first field and a second field, wherein the second field is used to indicate a collision queue, and the collision queue is used to indicate a sequence of resending access requests by second sending nodes that have sent the access requests but the sent access requests collide, receive, in an access timeslot, the access request sent by the second sending node, wherein the access timeslot is an access timeslot randomly selected by the second sending node arranged at a queue head of the collision queue.

36. The receiving node according to claim 34, wherein the channel configuration information indicates that the channel comprises at least one access timeslot, and the access node list indicates information about a second sending node that is allowed to send an access request to the second receiving node; and
the receiving module is specifically configured to:
receive, in an i^{th} access timeslot, the access request sent by an i^{th} second sending node, wherein i is less than or equal to m, m is a total quantity of access timeslots, and i and m are both positive integers.

37. The receiving node according to claim 35 or 36, wherein the channel configuration information indicates that the channel comprises at least one transmission timeslot, and the transmission node list indicates information about a second sending node that is allowed to send the second data frame to the second receiving node; and
the receiving module is specifically configured to:
receive the second data frame sent in the transmission timeslot by the second sending node in the transmission node list.

38. The receiving node according to claim 34, wherein the channel configuration information indicates that the channel comprises at least one transmission timeslot, and the transmission node list indicates information about a second sending node that is allowed to send the second data frame to the first sending node; and
the receiving module is specifically configured to:
if the second sending node has a second data frame to be sent to the second receiving node, receive the second data frame sent by the second sending node after the transmission timeslot starts.
